# EUROPEAN PATENT SPECIFICATION

(11) **EP 4 213 521 B1**
(45) Date of publication and mention of the grant of the patent: **11.12.2024**
(21) Application number: 20955861.8
(22) Date of filing: 01.10.2020
(51) Int. Cl.: H04W 92/18, H04W 12/37, H04W 12/10, H04W 88/04

(54) **SECURE COMMUNICATION METHOD, APPARATUS AND SYSTEM**
VERFAHREN, VORRICHTUNG UND SYSTEM ZUR SICHEREN KOMMUNIKATION
PROCÉDÉ, APPAREIL ET SYSTÈME DE COMMUNICATION SÉCURISÉE

(43) Date of publication of application: 19.07.2023
(73) Proprietor: Huawei Technologies Co., Ltd., Shenzhen, Guangdong 518129 (CN)
(72) Inventor: LI, He, Shenzhen, Guangdong 518129 (CN); WU, Rong, Shenzhen, Guangdong 518129 (CN)
(74) Representative: Gill Jennings & Every LLP
(86) International application number: PCT/CN2020/119774
(87) International publication number: WO 2022/067841

(56) References cited:
- EP-A1- 3 678 450
- WO-A1-2019/051776
- WO-A1-2019/219667
- WO-A1-2020/153894
- CN-A- 109 362 108
- CN-A- 110 831 007
- CN-A- 110 831 007
- SAMSUNG: "Handling security policies in ProSe relay communication", vol. SA WG3, no. e-meeting; 20200817 - 20200828, 7 August 2020 (2020-08-07), XP051916486, Retrieved from the Internet <URL:https://ftp.3gpp.org/tsg_sa/WG3_Security/TSGS3_100e/Docs/S3-201963.zip S3-201963-Handling security policies in ProSe relay communication.doc> [retrieved on 20200807]
- SAMSUNG: "Handling security policies in ProSe relay communication", 3GPP DRAFT; S3-201963, vol. SA WG3, 7 August 2020 (2020-08-07), pages 1 - 1, XP051916486

## Description

### TECHNICAL FIELD

This application relates to the field of communication technologies, and in particular, to a secure communication method, an apparatus, and a system.

### BACKGROUND

Currently, device to device (device to device, D2D) communication allows direct communication between user equipments (user equipment, UE).

When a terminal device (for example, remote (remote) UE) is out of coverage of a communication network, or communication quality between the terminal device and an access network device in the communication network is poor, non-direct communication may be established with the communication network according to D2D communication via a relay (for example, relay (relay) UE). The relay may establish a protocol data unit (protocol data unit, PDU) session for transmission data of a remote device, and transmit data received from the remote UE to a data network through the PDU session, or send, to the remote UE, data obtained from the data network through the PDU session.

In this scenario in which the terminal device performs communication via the relay, how to implement collaborative processing of security protection on user plane data on links at two ends of the relay is a problem that needs to be resolved.

SAMSUNG, "Handling security policies in ProSe relay communication", vol. SA WG3, no. e-meeting; 20200817 - 20200828, (20200807), 3GPP DRAFT; S3-201963, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, URL: https://ftp.3gpp.org/tsg_sa/WG3_Security/TSGS3_100e/Docs/S3-201963.zip S3-201963-Handling security policies in ProSe relay communication.doc, (20200807), XP051916486 discloses a description of how two security policies are handled when a remote UE accesses the network via relay and PCS unicast link (remote UE to relay UE) and Uu (relay UE to network) is established.

CN 110831007 A discloses a user plane integrity protection method and device, and equipment. The user plane integrity protection method comprises the steps that a first base station acquires user plane integrity protection information of user equipment (UE); and if the first base station supports user plane integrity protection and the user plane integrity protection information indicates that the UE supports user plane integrity protection, the first base station starts user plane integrity protection according to a user plane integrity protection algorithm.

### SUMMARY

This application provides a secure communication method, an apparatus, and a system, to implement collaborative processing of security protection on user plane data on links at two ends of a relay.

According to a first aspect, a first secure communication method is provided in accordance with appended claim 1. The method is performed by a communication apparatus. The communication apparatus is a second terminal device or a communication apparatus that can support the second terminal device in implementing a function required for the method. Certainly, the communication apparatus may alternatively be another communication apparatus, for example, a chip system. In the first aspect, an example in which the communication apparatus is the second terminal device is used. The method includes:

The second terminal device receives a first request message about a first terminal device from a relay, where the first request message includes a PC5 user plane security policy of the first terminal device and a PC5 user plane security policy of the relay; determines first information according to a PC5 user plane security policy of the second terminal device, the PC5 user plane security policy of the first terminal device, and the PC5 user plane security policy of the relay; and sends the first information to the relay, where the first information indicates a user plane security protection method of a first PC5 link and a user plane security protection method of a second PC5 link, where the user plane security protection method of the first PC5 link is the same as the user plane security protection method of the second PC5 link.

The first PC5 link is a PC5 link between the relay and the first terminal device, and the second PC5 link is a PC5 link between the relay and the second terminal device.

According to the method provided in embodiments of this application, collaborative processing of user plane security protection can be implemented between devices. For example, all devices may activate an integrity protection method for user plane data, or none of the devices activates the integrity protection method for user plane data, so that processing manners of the devices are consistent.

In a possible implementation, the first information indicates the user plane security protection method of the second PC5 link. In embodiments of this application, it is to be avoided that user plane security protection methods of two links are inconsistent when security activation is performed on segments. Therefore, that the first information indicates the user plane security protection method of the second PC5 link may be further understood as that the first information indicates the user plane security protection method of the first PC5 link and the user plane security protection method of the second PC5 link, including:
the first information indicates that both user plane integrity protection of the first PC5 link and/or user plane integrity protection of the second PC5 link are/is enabled or disabled, and/or both user plane confidentiality protection of the first PC5 link and/or user plane confidentiality protection of the second PC5 link are/is enabled or disabled.

In embodiments of this application, it can be ensured that the user plane security protection method of the first PC5 link is the same as the user plane security protection method of the second PC5 link.

In a possible implementation, the method further includes:
receiving a second request message about the first terminal device from the relay, where the second request message includes a PC5 control plane security policy of the first terminal device and a PC5 control plane security policy of the relay;
determining a control plane security algorithm of the second PC5 link according to a PC5 control plane security policy of the second terminal device, the PC5 control plane security policy of the first terminal device, and the PC5 control plane security policy of the relay; and
sending, by the second terminal device, the control plane security algorithm of the second PC5 link to the relay, where the control plane security algorithm indicates a control plane security protection method of the second PC5 link and a control plane security protection method of the first PC5 link, where the control plane security protection method of the first PC5 link is the same as the control plane security protection method activated on the second PC5 link.

In embodiments of this application, because the control plane security protection method of the first PC5 link is the same as the control plane security protection method of the second PC5 link, inconsistency of control plane security of two links when security activation occurs in segments (for example, hop-to-hop (hop-to-hop) security is used for a security endpoint policy of UE-1) can be avoided.

It is to be noted that, when security activation does not occur in segments, control plane security protection methods of two links may be inconsistent.

In a possible implementation, the second request message further includes an indication of a security endpoint policy, and the indication of the security endpoint policy indicates that a security endpoint is located on the relay.

In embodiments of this application, it can be ensured that when security activation is performed on segments, the user plane security protection method of the first PC5 link is the same as the user plane security protection method of the second PC5 link.

In a possible implementation, that the control plane security algorithm indicates a control plane security protection method of the second PC5 link and a control plane security protection method of the first PC5 link includes:
the control plane security algorithm indicates that both control plane integrity protection of the first PC5 link and control plane integrity protection of the second PC5 link are enabled or disabled, and/or both control plane confidentiality protection of the first PC5 link and control plane confidentiality protection of the second PC5 link are enabled or disabled.

In embodiments of this application, it can be ensured that the control plane security protection method of the first PC5 link is the same as the control plane security protection method activated on the second PC5 link, thereby improving link security.

In a possible implementation, the determining first information according to a PC5 user plane security policy of the second terminal device, the PC5 user plane security policy of the first terminal device, and the PC5 user plane security policy of the relay includes:
determining the first information according to the PC5 user plane security policy of the second terminal device, the PC5 user plane security policy of the first terminal device, the PC5 user plane security policy of the relay, and the control plane security algorithm of the second PC5 link.

A security level of user plane security of the second PC5 link is not higher than a security level of control plane security of the second PC5 link, and a security level of user plane security of the first PC5 link is not higher than a security level of control plane security of the first PC5 link.

In embodiments of this application, a current requirement that a security level of user plane security is not higher than a security level of control plane security can be satisfied.

In a possible implementation, that user plane security of the second PC5 link is not higher than control plane security of the second PC5 link, and a security level of user plane security of the first PC5 link is not higher than control plane security of the first PC5 link includes:
when control plane confidentiality protection of a third PC5 link is enabled, user plane confidentiality protection of the third PC5 link is enabled or disabled;
when the control plane confidentiality protection of the third PC5 link is disabled, the user plane confidentiality protection of the third PC5 link is disabled;
when control plane integrity protection of the third PC5 link is enabled, user plane integrity protection of the third PC5 link is enabled or disabled; and
when the control plane integrity protection of the third PC5 link is disabled, the user plane integrity protection of the third PC5 link is disabled, where
the third PC5 link is the second PC5 link or the first PC5 link.

In embodiments of this application, a current requirement that a security level of user plane security is not higher than a security level of control plane security can be satisfied.

According to a second aspect, this application provides a communication apparatus in accordance with appended claim 8. The apparatus has functions of implementing the embodiments of the first aspect. The function may be implemented by hardware, or may be implemented by hardware executing corresponding software. The hardware or the software includes one or more modules corresponding to the functions.

The processing unit may be, for example, a processor. The receiving unit may be, for example, a receiver. The sending unit may be, for example, a transmitter. The receiver and the transmitter include a radio frequency circuit. Optionally, the apparatus further includes a storage unit, and the storage unit may be, for example, a memory. When the apparatus includes a storage unit, the storage unit stores computer-executable instructions. The processing unit is connected to the storage unit. The processing unit executes the computer-executable instructions stored in the storage unit, to enable the apparatus to perform the method in any one of the first aspect to the third aspect.

In another possible design, the apparatus is a chip. The chip includes a receiving unit and a sending unit, and optionally further includes a processing unit. The processing unit may be, for example, a processing circuit. The receiving unit may be, for example, an input interface, a pin, a circuit, or the like. The sending unit may be, for example, an output interface, a pin, a circuit, or the like. The processing unit may execute computer-executable instructions stored in a storage unit, so that the foregoing sending method in any one of the first aspect to the third aspect is performed. Optionally, the storage unit is a storage unit in the chip, for example, a register or a cache. The storage unit may alternatively be a storage unit located outside the chip in the terminal, for example, a read-only memory (read-only memory, ROM), another type of static storage device capable of storing static information and instructions, or a random access memory (random access memory, RAM).

The processor mentioned in any one of the foregoing designs may be a general-purpose central processing unit (Central Processing Unit, CPU), a microprocessor, an application-specific integrated circuit (application-specific integrated circuit, ASIC), or one or more integrated circuits configured to control program execution of the methods in the first aspect to the third aspect.

According to a third aspect, embodiments of this application further provide a computer-readable storage medium in accordance with appended claim 15. The storage medium stores a computer program or instructions. When the computer program or the instructions are executed, the method in any design example in the first aspect can be implemented.

In addition, for technical effects brought by any design manner of the sixth aspect to the thirteenth aspect, refer to technical effects brought by different design manners of the first aspect to the fifth aspect. Details are not described herein again.

### BRIEF DESCRIPTION OF DRAWINGS

FIG. 1A and FIG. 1B are architectural diagrams of a system according to an embodiment of this application;
FIG. 2A and FIG. 2B are schematic diagrams of a communication scenario according to an embodiment of this application;
FIG. 3 is a schematic diagram of a security policy obtaining method according to an embodiment of this application;
FIG. 4A and FIG. 4B are a schematic diagram of a secure communication method according to an embodiment of this application;
FIG. 5A and FIG. 5B are a schematic diagram of another secure communication method according to an embodiment of this application;
FIG. 6A and FIG. 6B are a schematic diagram of another secure communication method according to an embodiment of this application; and
FIG. 7 and FIG. 8 each are a schematic diagram of a structure of a communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The following first describes definitions of terms in this application.

### 1. PC5 connection and PC5 connection establishment procedure

The PC5 connection in embodiments of this application is a communication connection between terminal devices based on a PC5 interface.

The PC5 connection establishment procedure in embodiments of this application is used to establish a communication connection between at least two terminal devices that support the PC5 interface. After the PC5 connection is established, the at least two terminal devices may perform control plane signaling negotiation and/or user plane data transferring over the PC5 connection. The PC5 connection establishment procedure in embodiments of this application may include a PC5 one-to-one communication (one-to-one communication) procedure and a PC5 one-to-many communication (one-to-many communication) procedure. The PC5 one-to-one communication procedure is used to establish a communication connection between two terminal devices that support a PC5 interface, and the PC5 one-to-many communication procedure is used to establish a communication connection between more than two terminal devices that support a PC5 interface. In the following embodiments of this application, an example in which a communication connection is established between two terminal devices is used for description. In other words, in the following embodiments of this application, the PC5 one-to-one communication procedure is used as an example for description. For a manner of establishing a communication connection between any two terminal devices in the PC5 one-to-many communication procedure, refer to a procedure of establishing a communication connection between two terminal devices in the PC5 one-to-one communication procedure. This is uniformly described herein, and details are not described below.

### 2. Security policy

The security policy is a policy for describing whether to enable security protection and may be used to determine a security protection method. In embodiments of this application, security policies used in different scenarios include a PC5 user plane security policy and/or a PC5 control plane security policy. The PC5 user plane security policy includes a user plane confidentiality protection policy in the PC5 connection and/or a user plane integrity protection policy in the PC5 connection. The PC5 control plane security policy includes a control plane confidentiality protection policy in the PC5 connection and/or a control plane integrity protection policy in the PC5 connection. In other words, the security policy includes at least one of the following:
a control plane confidentiality protection policy in the PC5 connection;
a control plane integrity protection policy in the PC5 connection;
a user plane confidentiality protection policy in the PC5 connection; or
a user plane integrity protection policy in the PC5 connection.

Control plane confidentiality protection is to protect confidentiality of signaling during transmission. Control plane integrity protection is to protect integrity of signaling during transmission. User plane confidentiality protection is to protect confidentiality of user plane data during transmission. User plane integrity protection is to protect integrity of user plane data during transmission. In embodiments of this application, integrity means that obtained signaling or data is consistent with original signaling or data and is not modified. Therefore, integrity protection is used to prevent attackers from attacking the signaling or data. Confidentiality means that real content cannot be directly read. Therefore, confidentiality protection is used to make the attacker "unreadable". In addition, confidentiality protection in embodiments of this application may also be referred to as encryption protection. This is uniformly described herein, and details are not described below.

In embodiments of this application, the control plane confidentiality protection policy in the PC5 connection and the control plane integrity protection policy in the PC5 connection belong to the PC5 control plane security policy in the PC5 connection, and the user plane confidentiality protection policy in the PC5 connection and the user plane integrity protection policy in the PC5 connection belong to the PC5 user plane security policy in the PC5 connection. This is uniformly described herein, and details are not described below again.

In embodiments of this application, there are three security policies in total: required (REQUIRED), not needed (NOT NEEDED), and preferred (PREFERRED). Alternatively, REQUIRED means that security needs to be enabled, NOT NEEDED means that security does not need to be enabled, and PREFERRED means that security may be preferentially enabled or optionally disabled. This is uniformly described herein, and details are not described below again.

For example, the control plane confidentiality protection policy in the PC5 connection is used as an example. In this case, the control plane confidentiality protection policy in the PC5 connection includes: The control plane confidentiality protection in the PC5 connection is required (REQUIRED), the control plane confidentiality protection in the PC5 connection is not needed (NOT NEEDED), or the control plane confidentiality protection in the PC5 connection is preferred (PREFERRED). For an example of the control plane confidentiality protection policy in the PC5 connection, the user plane confidentiality protection policy in the PC5 connection, or the user plane integrity protection policy in the PC5 connection, refer to the example of the control plane confidentiality protection policy in the PC5 connection. Details are not described herein again.

It is to be noted that in embodiments of this application, when a security policy is sent, generally, only one of the three policies (REQUIRED, NOT NEEDED, and PREFERRED) is selected for sending. In some special scenarios, at least two policies may be selected for sending, and one of the policies is PREFERRED. For example, when NOT NEEDED and PREFERRED are sent, it represents that security protection is preferentially disabled. When REQUIRED and PREFERRED are sent, it represents that security protection is preferentially enabled.

It is to be noted that in embodiments of this application, the control plane confidentiality protection policy in the PC5 connection, the control plane integrity protection policy in the PC5 connection, the user plane confidentiality protection policy in the PC5 connection, and the user plane integrity protection policy of the PC5 connection may be the same. This is not specifically limited in embodiments of this application.

### 3. Security capability

In embodiments of this application, the security capability includes at least one of the following:
one or more control plane confidentiality protection algorithms supported in the PC5 connection;
one or more control plane integrity protection algorithms supported in the PC5 connection;
one or more user plane confidentiality protection algorithms supported in the PC5 connection; or
one or more user plane integrity protection algorithms supported in the PC5 connection.

The control plane confidentiality protection algorithm is a confidentiality protection algorithm for protecting a control plane. The control plane integrity protection algorithm is an integrity protection algorithm for protecting the control plane. The user plane confidentiality protection algorithm is a confidentiality protection algorithm for protecting a user plane. The user plane integrity protection algorithm is a user plane protection algorithm for protecting the control plane. The one or more control plane confidentiality protection algorithms supported in the PC5 connection and the one or more control plane integrity protection algorithms supported in the PC5 connection belong to a control plane security capability in the PC5 connection. The one or more user plane confidentiality protection algorithms supported in the PC5 connection and the one or more user plane integrity protection algorithms supported in the PC5 connection belong to a user plane security capability in the PC5 connection. This is uniformly described herein, and details are not described below.

It is to be noted that in embodiments of this application, the one or more control plane confidentiality protection algorithms supported in the PC5 connection, the one or more control plane integrity protection algorithms supported in the PC5 connection, the one or more user plane confidentiality protection algorithms supported in the PC5 connection, and the one or more user plane integrity protection algorithms supported in the PC5 connection may be the same or have a common entry. This is not specifically limited in embodiments of this application.

4. Security algorithm. The security algorithm may include a user plane security algorithm (a security algorithm used on a user plane) and a signaling plane security algorithm (a security algorithm used on a signaling plane). The security algorithm used on the user plane is for protecting user plane data, and may include a user plane encryption algorithm and a user plane integrity algorithm. The security algorithm used on the signaling plane is for protecting signaling, and may include a signaling plane encryption algorithm and a signaling plane integrity algorithm.

5. Security key. The security key may include a user plane security key and a signaling plane security key. The user plane security key is for protecting user plane data, and may include a user plane encryption key and a user plane integrity protection key. The signaling plane security key is for protecting signaling, and may be, for example, a key for protecting radio resource control (radio resource control, RRC) signaling, namely, an RRC key. The RRC key may include an RRC encryption key and an RRC integrity protection key.

6. Activating user plane/signaling plane security means that when a user plane/signaling plane security protection method is determined, the user plane/signaling plane security may start to be activated by using a user plane/signaling plane security algorithm and a user plane/signaling plane security key, that is, security protection may start to be performed on to-be-transmitted user plane data/signaling by using the user plane/signaling plane security protection method, the user plane/signaling plane security algorithm, and the user plane/signaling plane security key. For example, if a determined user plane security protection method is that user plane confidentiality protection is enabled and user plane integrity protection is disabled, a user plane encryption algorithm is an encryption algorithm A, and a user plane encryption key is a key K, user plane confidentiality protection is performed on to-be-transmitted user plane data by using the encryption algorithm A and the key K. An effect that can be achieved by activating a user plane security protection method is that a node that activates user plane security may start to perform security protection on user plane data and may start to perform security deprotection on user plane data. It can be understood that security protection and security deprotection may further be separately activated. For example, a base station activates security deprotection after sending a security activation message, and the base station activates security protection after receiving a security activation acknowledgment message.

### 7. Security protection and security deprotection

Security protection in embodiments of this application means to protect user plane data/control plane signaling by using a security protection method. Security deprotection in embodiments of this application means to restore the user plane data/control plane signaling according to the security protection method. The security protection method herein includes whether confidentiality protection and/or integrity protection are/is enabled. This is uniformly described herein, and details are not described below.

Specifically, when confidentiality protection is enabled, encryption protection may be performed on the user plane data/control plane signaling by using an encryption key and an encryption algorithm; and when integrity protection is enabled, integrity protection may be performed on the user plane data/control plane signaling by using an integrity protection key and an integrity protection algorithm. Certainly, in embodiments of this application, when integrity protection is disabled, integrity protection may be performed on the user plane data/control plane signaling by using a message integrity check code (message Integrity check, MIC). This is not specifically limited in embodiments of this application. For related descriptions of the MIC, refer to subsequent embodiments. Details are not described herein again. In addition, it is to be noted that, when encryption protection and integrity protection need to be performed on the user plane data/control plane signaling, encryption protection may be first performed on the user plane data/control plane signaling, and then integrity protection is performed. Alternatively, integrity protection may be first performed on the user plane data/control plane signaling, and then encryption protection is performed. An execution sequence of encryption protection and integrity protection is not limited in embodiments of this application. This is uniformly described herein, and details are not described below.

Specifically, when confidentiality protection is enabled, the user plane data/control plane signaling may be decrypted by using an encryption key and an encryption algorithm; and when integrity protection is enabled, integrity protection verification may be performed on the user plane data/control plane signaling by using an integrity protection key and an integrity protection algorithm. Certainly, in embodiments of this application, when integrity protection is disabled, if integrity protection is performed on the user plane data/control plane signaling by using the MIC, correspondingly, integrity protection verification may be performed on the user plane data/control plane signaling by using an expected MIC. This is not specifically limited in embodiments of this application. For related descriptions of the expected MIC, refer to subsequent embodiments. Details are not described herein again. In addition, it may be understood that, when confidentiality protection and integrity protection are performed on both user plane data/control plane signaling, if confidentiality protection is performed on the user plane data/control plane signaling first and then integrity protection is performed on the user plane data/control plane signaling, a sequence of security deprotection is to perform integrity protection verification first and then decrypt the encrypted user plane data/control plane signaling. If integrity protection is first performed on the user plane data/control plane signaling and then encryption is performed, a sequence of security deprotection is that the encrypted user plane data/control plane signaling is first decrypted and then integrity protection verification is performed. This is uniformly described herein, and details are not described below again.

The security protection method used on the control plane of the PC5 connection is used to protect all parameters or some parameters transmitted in the control plane signaling of the PC5 connection. The security protection method used on the control plane of the PC5 connection may include, for example, whether confidentiality protection and/or integrity protection of the control plane of the PC5 connection are/is enabled.

A security protection method used on a user plane of the PC5 connection is used to protect some or all user plane data of the PC5 connection. The security protection method used on the user plane of the PC5 connection may include, for example, whether confidentiality protection and/or integrity protection of the user plane of the PC5 connection are/is enabled.

It is to be noted that, in embodiments of this application, the security protection method used on the control plane of the PC5 connection may also be referred to as a security protection method used for the control plane signaling of the PC5 connection. The security protection method used on the user plane of the PC5 connection may also be referred to as a security protection method used for the user plane data of the PC5 connection. This is uniformly described herein, and details are not described below.

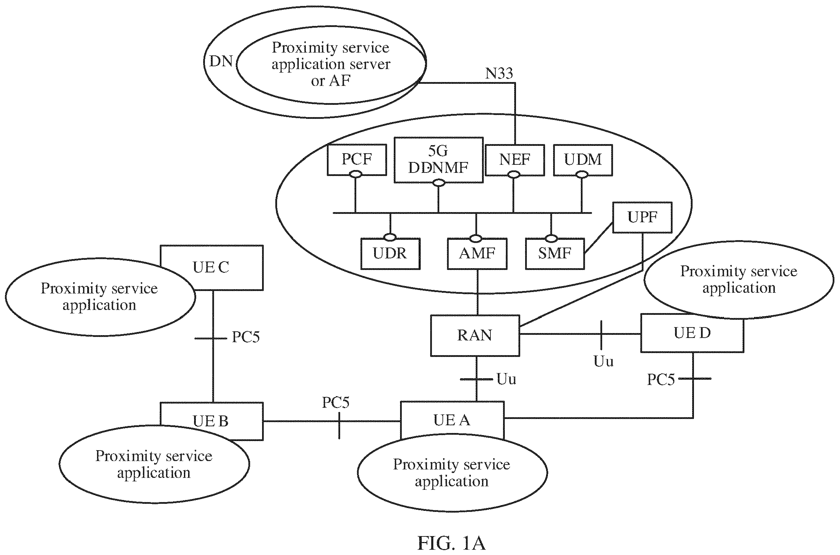

FIG. 1A is a schematic diagram of a specific control plane system architecture to which this application is applicable. A network element in the system architecture includes a terminal device (user equipment, UE). FIG. 1A shows an example of four UEs: UE A, UE B, UE C, and UE D. The system architecture further includes a radio access network (radio access network, RAN), an access and mobility management function (access and mobility management function, AMF) network element, a session management function (session management function, SMF) network element, a user plane function (user plane function, UPF) network element, a unified data management (unified data management, UDM) network element, a unified data repository (unified data repository, UDR) network element, an application function (application function, AF) network element, a data network (data network, DN), a capability exposure function (network exposure function, NEF) network element, a 5G direct communication discovery name management function (5G direct discovery name management function, 5G DDNMF) network element, a policy control function (policy control function, PCF) network element, a proximity service application server (ProSe application server), and the like. Network elements such as the AMF network element, the SMF network element, the UDM network element, the NEF network element, and the PCF network element are core network elements in a fifth-generation mobile communication technology (5th generation mobile networks, 5G) network architecture. Herein, only some core network elements are shown as an example. The system architecture may further include another core network element.

The terminal device is a device having a wireless transceiver function, may be deployed on land, and includes an indoor or outdoor device, a handheld device, or a vehicle-mounted device; may be deployed on water (for example, on a ship); or may be deployed in the air (for example, on an airplane, a balloon, and a satellite). The terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal device in embodiments of this application may be a terminal device that can perform communication in a proximity service (proximity service, ProSe) scenario. The terminal device has a proximity service application (ProSe application) function, and terminal devices having a ProSe application function may communicate with each other through a PC5 interface.

Embodiments of this application relate to three types of terminal devices: a first terminal device, a relay device, and a second terminal device. The first terminal device may request another terminal device (including the second terminal device) to provide a proximity service to the first terminal device. When the second terminal device can provide the proximity service to the first terminal device, the second terminal device provides the proximity service to the first terminal device. The second terminal device may directly communicate with the first terminal device, or may communicate with the first terminal device via the relay device.

In different discovery scenarios, names of the second terminal device that provides the proximity service and the first terminal device that requires the proximity service are different. Two discovery scenarios are described herein, which are an open proximity service discovery (open ProSe discovery) scenario and a restricted proximity service discovery (restricted ProSe discovery) scenario. For related descriptions of the open proximity service discovery scenario and the restricted proximity service discovery scenario, refer to the conventional technology. Details are not described herein again.

For example, a user A uses a terminal device A to play a game, and the user A does not have a specific game partner, and only needs to find a game partner "randomly". This scenario is the open proximity service discovery scenario. If the user A uses the terminal device A to play a game and has a specific partner, the user A may "designate" a partner by using the terminal device A, and only the partner designated by the user A can access the game. This scenario is the restricted proximity service discovery scenario.

Optionally, in embodiments of this application, the discovery mode in the discovery scenario includes a model A (model A) or a model B (model B). A difference between the model A and the model B lies in a manner in which a terminal device initiates discovery (discovery) in a discovery scenario.

Model A involves one terminal device announcing "I am here". Terminal devices involved in the model A are classified into announcing UE (announcing UE) and monitoring UE (monitoring UE). The announcing UE broadcasts "I am here". After receiving a message broadcast by the announcing UE, the monitoring UE determines, based on whether a service requirement of the monitoring UE is satisfied, whether to establish a connection to the announcing UE.

The model B involves one terminal device asking "Who is there?/Are you there?" Terminal devices involved in the model B are classified into discoveree UE (discoveree UE) and discoverer UE (discoverer UE). The discoverer UE initiates a request, and the request includes specific information, for example, "Who is there?/Are you there?" After receiving the request initiated by the discoverer UE, the discoveree UE determines, based on whether the discoveree UE can provide a service, whether to reply to the request. If the discoveree UE replies to the request, it indicates that "I am here." In embodiments of this application, the open proximity service discovery scenario is applicable only to the model A discovery mode, and the restricted proximity service discovery scenario is applicable to the model A discovery mode and model B discovery mode.

In embodiments of this application, a network side (for example, a core network element or a 5G DDNMF network element) may determine a type of the first terminal device or the second terminal device based on proximity service information reported by the first terminal device or the second terminal device to the network side. For example, a discovery command included in the proximity service information reported by the first terminal device or the second terminal device to the network side can indicate whether the first terminal device or the second terminal device is announcing UE or monitoring UE or is a response terminal device (response UE) or a query terminal device (query UE). The announcing UE and the monitoring UE are terminal devices at two ends in the model A, and the response UE and the query UE respectively correspond to the discoveree UE and the discoverer UE in the model B.

In embodiments of this application, before providing the proximity service to the first terminal device, the second terminal device needs to first verify an identity of the first terminal device, to determine whether the second terminal device is a terminal device that really requires the proximity service. Specifically, the second terminal device may report a message integrity code obtained from the first terminal device to the core network element or the 5G DDNMF network element. The message integrity code is generated based on a discovery key of the first terminal device, and the discovery key of the first terminal device is generated by using a key generation parameter obtained from the core network element or the 5G DDNMF network element. The core network element or the 5G DDNMF network element performs verification based on the message integrity code reported by the second terminal device and an expected message integrity code calculated by the 5G DDNMF network element based on the discovery key of the first terminal device. Alternatively, the second terminal device may obtain the discovery key of the first terminal device from the core network element or the 5G DDNMF network element, and the second terminal device calculates the expected message integrity code for verification.

Similarly, before accepting the proximity service provided by the second terminal device, the first terminal device may first verify an identity of the second terminal device, to determine whether the second terminal device is a terminal device that can really provide the proximity service. A specific manner is similar to a manner in which the second terminal device verifies an identity of the first terminal device.

A main function of the RAN is to control a user to wirelessly access a mobile communication network. The RAN is a part of a mobile communication system. The RAN implements a radio access technology. Conceptually, the RAN resides between a device (for example, a mobile phone, a computer, or any remote controller) and a core network, and provides a connection between the device and the core network.

The AMF network element is responsible for access management and mobility management of the terminal. During actual application, the AMF network element has a mobility management function of an MME in an LTE network architecture, and adds an access management function.

Optionally, the AMF network element can further generate a discovery key of a terminal device by using Kamf, and send the discovery key of the terminal device to a 5G DDNMF network element or another network element (for example, a ProSe application server).

Kamf is a root key of the terminal device, and allocated by a network side (for example, an AMF network element) to the terminal device when the terminal device registers with a network, and Kamf is separately stored on the terminal device and an AMF side.

The SMF network element is responsible for session management such as user session establishment.

The PCF network element is a control plane function provided by an operator, and is configured to provide a session policy to the SMF network element. The policy may include a charging-related policy, a QoS-related policy, an authorization-related policy, and the like.

The UPF network element is a user-plane function network element, and is mainly responsible for connecting to an external network. The UPF network element has related functions of a serving gateway (serving gateway, SGW) and a public data network gateway (public data network gateway, PDN-GW) in LTE.

The DN is responsible for providing a service for the terminal. For example, some DNs provide a network access function for the terminal, and some other DNs provide a short message service function for the terminal.

The UDM network element may store subscription information of a user, and an implementation is similar to that of an HSS in 4G. In embodiments of this application, the UDM can determine a subscription permanent identifier (subscription permanent identifier, SUPI) of UE based on an anonymous identifier or a temporary identifier of the UE.

The UDR network element is mainly configured to store subscription information, policy data, open structured data, and application data.

The AF network element may be a third-party application control platform, or may be an operator-specific device. The AF network element may provide services for a plurality of application servers.

The NEF network element exposes a capability and an event of another network element to a third-party partner or the AF network element. The NEF network element provides the AF network element with a method for securely providing information to a third generation partnership project (3rd generation partnership project, 3GPP) network, and can authenticate, authorize, and assist in restricting the AF network element. In addition, the NEF network element may further convert information exchanged by the AF network element and information exchanged by the core network function network element.

The proximity service application server (ProSe application server) stores a user identifier of a proximity service, and may further verify a terminal device in a discovery scenario. A key preconfigured for the terminal device may be further stored, and the key is a key related to the proximity service.

In an actual application, the proximity service application server (ProSe application server) may be used as an AF network element, that is, an AF network element having a function of a ProSe Application server. In this way, the ProSe application server and the UE may perform user plane communication through a UE-RAN-UPF-AF path. The ProSe application server can also communicate with other core network NEs through the NEF network element, for example, communicate with the PCF network element through the NEF network element.

In the open proximity service discovery scenario, the 5G DDNMF network element may allocate a proximity service application identifier (ProSe application ID) and a proximity service application code (ProSe application code), and process a mapping between the proximity service application identifier (ProSe application ID) and the proximity service application code (ProSe application code). In the restricted proximity service discovery scenario, the 5G DDNMF network element may communicate with the ProSe application server through a PC2 interface, and is configured to process authorization of a discovery request (discovery request), allocate a restricted proximity service application identifier (ProSe discovery UE ID) and a restricted proximity service code (ProSe restricted code), and process a mapping between the proximity service application identifier (ProSe discovery UE ID) and the restricted proximity service code (ProSe restricted code). Both the proximity service application code (ProSe application code) and the restricted proximity service code (ProSe restricted code) may be used as a proximity service temporary identifier mentioned in embodiments of this application.

In embodiments of this application, a security function is added to the 5G DDNMF network element, to verify identities of terminal devices (for example, the first terminal device and the second terminal device). For example, after receiving the message integrity code that is reported by the second terminal device and that is from the first terminal device, the 5G DDNMF network element may generate the expected message integrity code by using the discovery key of the first terminal device, and after determining that the message integrity code is consistent with the expected message integrity code, notify the second terminal device that verification on the first terminal device succeeds.

It is to be noted that herein, an example in which a security function is added to the 5G DDNMF network element is merely used for description. The security function may alternatively be added to another network element, for example, a core network element or a ProSe application server, and the another network element interacts with the terminal device to verify an identity of the another terminal device.

Although not shown, the core network element further includes an authentication service function (authentication server function, AUSF) network element, an authentication and key management for applications anchor function (authentication and key management for applications (AKMA) anchor function, AAnF) network element, a bootstrap service function (bootstrapping server function, BSF), and the like. The AUSF network element has an authentication service function. In embodiments of this application, the AUSF network element can generate a discovery key of a terminal device by using Kausf of the terminal device, and send the discovery key of the terminal device to the 5G DDNMF network element. Similarly, the AAnF network element can generate the discovery key of the terminal device by using Kakma, and send the discovery key of the terminal device to the 5G DDNMF network element. The bootstrap service function (bootstrapping server function, BSF) network element can generate the discovery key of the terminal device by using Ks, and send the discovery key of the terminal device to the 5G DDNMF network element.

Kausf, Kakma, or Ks is also used as a root key used to generate the discovery key of the terminal device. These keys are keys that are allocated by the network side to the terminal device and that are stored on the network side when the terminal device registers with a network, and the keys are the same as keys that are generated by the terminal device and that are stored on a terminal device side.

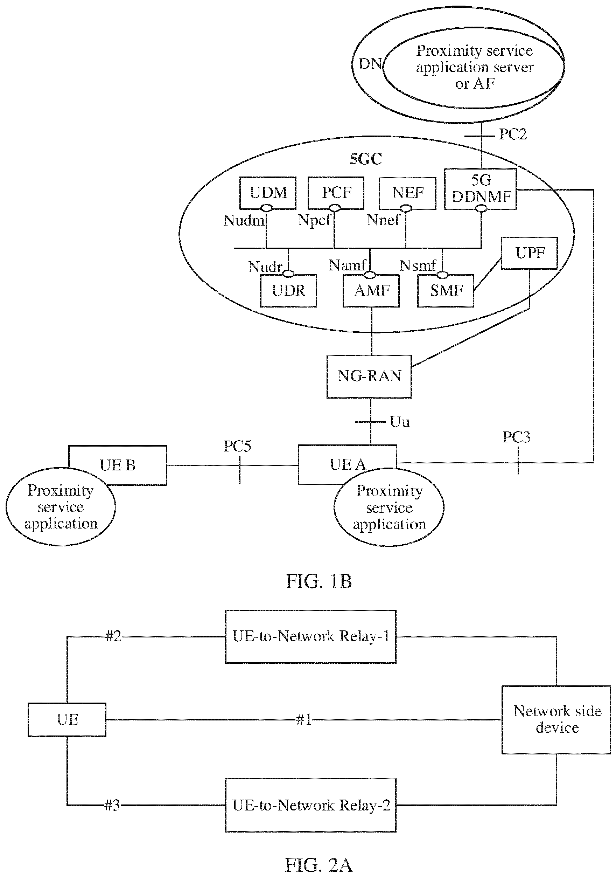

FIG. 1B is a schematic diagram of a specific user plane system architecture to which this application is applicable. For descriptions of functions of the network element, refer to descriptions of functions of corresponding network elements in FIG. 1A. Details are not described again. The user plane system architecture mainly means that the UE A interacts with the 5G DDNMF through a user plane. To be specific, the UE first accesses a 5GC to complete establishment of a user plane, and then the UE A interacts with the 5G DDNMF through the user plane.

A main difference between FIG. 1B and FIG. 1A lies in that a manner in which the UE A is connected to the 5G DDNMF is different. The control plane system architecture mainly means that the UE interacts with the 5G DDNMF by using a control plane. To be specific, the UE first finds an AMF based on a NAS message, and then the AMF forwards the NAS message to the 5G DDNMF.

FIG. 2A shows a system architecture of a UE-to-network relay (UE-to-Network Relay). The system architecture shows that UE may access a network in two manners and three paths. The two manners are respectively a manner in which the UE directly accesses the network (that is, a path #1 shown in the figure) and a manner in which the UE accesses the network via a relay (Relay) (that is, a path #2 and a path #3 shown in the figure).

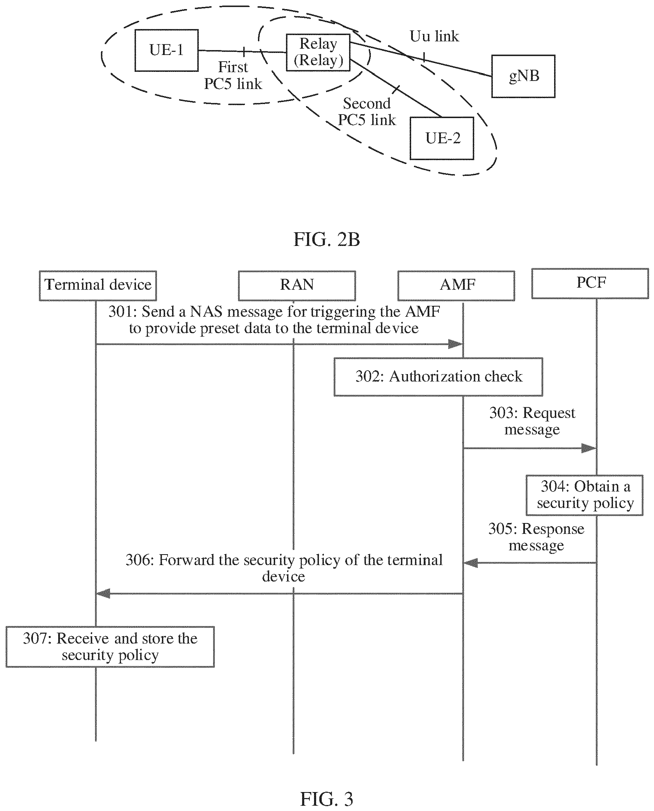

In addition, FIG. 2B shows an architecture in which UE-1 and UE-2 communicate via a relay. In this case, the relay (Relay) is used as a medium for communication between the UE-1 and the UE-2, and the UE-1 and the UE-2 can communicate with each other via the relay.

Currently, for a scenario in which the UE-1 and the UE-2 communicate via the relay shown in FIG. 2B, because a relationship between activation results of a security protection method between links (for example, a first PC5 link and a second PC5 link, or a first PC5 link and a Uu link shown in FIG. 2B) at two ends of a relay is not defined currently, when security activation occurs in segments (for example, a security endpoint policy of UE-1 uses hop-to-hop (hop-to-hop) security), the security protection of the two links may be inconsistent. For example, it is assumed that security protection for links at both ends of the relay is as follows: for the first PC5 link between the UE-1 and the relay, user plane confidentiality protection is enabled, and user plane integrity protection is enabled. However, for the second PC5 link between the relay and the UE-2, user plane confidentiality protection is disabled, and user plane integrity protection is enabled. As a result, confidentiality protection is performed on the user plane data only on the first PC5 link, that is, attackers may illegally obtain the user plane data from the link between the relay and the UE-2. Therefore, confidentiality protection on the first PC5 link between the UE-1 and the relay is meaningless, and processing performance of the UE-1 and the relay is wasted. It can be learned that, a current communication manner of a system of a UE-to-network relay (UE-to-Network Relay) is still insecure.

Therefore, embodiments of this application provide a secure communication method. The method includes: A relay device determines a user plane protection method of a first PC5 link between the relay device and a first terminal device according to a user plane protection method of a second PC5 link between the relay device and a second terminal device, to ensure consistency of user plane security protection results of the two links, to avoid a problem that user plane security protection fails because user plane security protection methods used by the two PC5 links are inconsistent.

The following describes, with reference to the accompanying drawings, the technical solutions provided in embodiments of this application.

In the embodiments of this application, identifiers that may be involved include but are not limited to at least one of the following:

### 1. Terminal identifier.

The terminal identifier may include at least one of an international mobile subscriber identity (international mobile subscriber identification number, IMSI), a permanent equipment identifier (permanent equipment identifier, PEI), a subscription permanent identifier (subscriber permanent identifier, SUPI), a subscription concealed identifier (subscriber concealed identifier, SUCI), a temporary mobile subscriber identity (temporary mobile subscriber identity, TMSI), an IP multimedia public identity (IP multimedia public identity, IMPU), a media access control (media access control, MAC) address, an IP address, a cell phone number, or a globally unique temporary UE identity (globally unique temporary UE identity, GUTI). For example, the terminal identifier includes only an IMSI, includes only a PEI and a SUPI, includes only a PEI, a TMSI, and an IMPU, or includes an IMSI, a PEI, a SUPI, a SUCI, a TMSI, an IMPU, a MAC address, an IP address, a mobile phone number, a GUTI, and the like, and this is not limited herein. In subsequent embodiments, a UEID is used to represent the terminal identifier.

The PEI is a fixed identifier of the terminal device. The IMSI is a unique permanent identifier of a user in an LTE system. The SUPI is a permanent identifier of a user in the 5G system. The SUCI is a user identifier obtained after the SUPI is encrypted.

With reference to the accompanying drawings, the following describes a secure communication method provided in embodiments of this application. The secure communication method provided in embodiments of this application includes two parts: Part 1 relating to a security policy configuration method, and Part 2 in which a relay device or a second terminal device determines a user plane security protection method and a control plane security protection method for a PC5 link. The following describes the two parts in detail.

### Part 1

With reference to FIG. 3, a security policy configuration method according to an embodiment of this application is described. The method includes the following steps.

Step 301: A terminal device sends a NAS message to an AMF, where the message is for triggering the AMF to provide preset data to the terminal device, and the preset data is for establishing a PC5 link in a subsequent short-range communication (ProSe) scenario.

Specifically, the terminal device may send the NAS message to the AMF via a RAN.

For example, the NAS message may be a security policy preset data request (UE policy provisioning request) message of the terminal device. The message may include a terminal identifier (for example, a 5G-GUTI) of the terminal device and short-range communication role indication information (for example, a remote indication and/or a relay indication) of the terminal device.

The terminal identifier is used by a network side device to determine a terminal device that initiates the request. For example, the network side device may determine a SUPI of UE based on the 5G-GUTI, and obtain network side data of the UE based on the SUPI of the UE, for example, subscription data in a short-range (ProSe) communication scenario.

The short-range communication role indication information is used by the network side device to determine a type of UE as which the UE can access the network in a ProSe scenario. For example, the UE accesses the network as common UE; or may access the network as a relay serving another UE, to forward data between the UE and the accessed network for the another UE (or forward data between the UE and another UE for the another UE); or may access the network as remote (remote) UE, where the remote UE means that one UE needs to implement connection with another UE (or network) and exchange data via a relay. In other words, the remote UE cannot be connected to a network (or connected to another UE) without assistance of the relay UE.

For example, the short-range communication role indication information may be indicated in the following several possible implementations.

In a first possible implementation, the short-range communication role indication information is set to "0", indicating that the UE does not need to be used as a relay. In this case, "0" may be understood on a network side in two ways: (1) The UE can be used as remote UE, but cannot be used as relay UE. In this case, it may be understood that all UEs can be used as remote UEs. (2) The UE can be used as neither remote UE nor a relay. This embodiment does not limit a specific understanding manner. If this parameter is set to "1", it indicates that the UE can be used as a relay. In this case, "1" may be understood on the network side in two ways: (1) The UE can only be used as a relay. (2) The UE can be used as both remote UE and a relay. This embodiment does not limit a specific understanding manner.

In a second possible implementation, if the short-range communication role indication information is set to "00", it indicates that the UE does not need to be used as remote UE and does not need to be used as a relay; if the short-range communication role indication information is set to "01", it indicates that the UE cannot be used as remote UE but can be used as a relay; if the short-range communication role indication information is set to " 10", it indicates that the UE can be used as remote UE but cannot be used as a relay; and if the short-range communication role indication information is set to " 11", it indicates that the UE can be used as both remote UE and a relay.

In a third possible implementation, the short-range communication role indication information may be a character string, for example, "remote (remote)", "relay (relay)", or "remote and relay (remote & Relay)". This embodiment does not limit a quantity of character strings that may appear at the same time. That is, when only two character strings "remote (remote)" and "relay (relay)" can be used, the two character strings can be transmitted simultaneously, indicating that the UE can act as two roles at the same time. If only one role appears, it indicates that the UE can only act as one role. When all the three character strings are supported, "remote (remote)" indicates that the UE can only be used as remote UE, "relay (relay)" indicates that the UE can only be used as relay UE, and "remote and relay (remote & relay)" indicate that the UE can be used as both remote UE and relay UE.

Step 302: The AMF checks authorization information of the terminal device.

Specifically, the AMF needs to check whether identity indication information transferred by the terminal device is valid, that is, whether the terminal device can be used as remote UE (Remote UE), or the AMF needs to check whether the terminal device can be used as a relay. Alternatively, when the short-range communication role indication information indicates that the terminal device can be used as both remote UE and a relay, the AMF needs to perform the foregoing two identity checks at the same time.

Specifically, an implementation of the authorization check may be as follows: the AMF interacts with a UDM, and obtains, from the UDM, the subscription data of the terminal device in the ProSe communication scenario. The AMF determines, based on the subscription data, whether the terminal device can be used as relay UE and/or remote UE. Certainly, the AMF may alternatively obtain the subscription data of the terminal device from a PCF, or obtain the subscription data of the terminal device from a ProSe application server via a capability exposure network element. This is not limited in this embodiment.

Another implementation of the authorization check may be as follows: the AMF may obtain a check result of the authorization information of the terminal device from the PCF. In other words, the PCF interacts with the UDM, to obtain the subscription data of the terminal device in the ProSe scenario from the UDM. The PCF determines, based on the subscription data, whether the terminal device can be used as relay UE and/or remote UE, and then the PCF sends a check result to the AMF. Certainly, the PCF may alternatively obtain the subscription data of the terminal device from the ProSe application server or another device via the capability exposure network element. This is not limited in this embodiment.

Step 303: After the authorization check performed by the AMF on the terminal device succeeds, the AMF sends a request message to the PCF, where the message is for requesting security policy preset data of the terminal device.

For example, the AMF sends a (pcf UEPolicyControl Update) message to the PCF, where the message includes the short-range communication role indication information (for example, a remote UE indication/relay UE indication) of the terminal device. Optionally, the message further carries short-range (ProSe) communication-related information of the terminal device (for example, ProSe identity information of the UE: a ProSe User ID, ProSe application information, and a ProSe APP ID).

Step 304: The PCF determines a security policy of the terminal device.

Specifically, when determining, based on the short-range communication role indication information of the terminal device, that the terminal device can be used as a relay, the PCF determines a security policy used when the terminal device is used as a relay (a relay identity); or when determining that the terminal device can be used as remote UE, the PCF determines a security policy used when the terminal device is used as remote UE (a remote identity). When it is determined that the terminal device is common UE, the PCF determines the security policy used when the terminal device is used as common UE. The security policy may include a PC5 control plane security policy and/or a PC5 user plane security policy. When it is determined that the terminal device may be used as both a relay and remote UE, the PCF may separately determine a security policy used when the terminal device is used as a relay and a security policy used when the terminal device is used as remote UE.

In a possible embodiment, the PCF may further interact with another network element (for example, a 5G DDNMF), to obtain more ProSe-related information of the terminal device, for example, a ProSe APP code, where the ProSe APP code is used for discovery between UEs.

Step 305: The PCF sends a response message to the AMF, where the response message includes the security policy of the terminal device.

Specifically, the PCF returns a Nafm_Communication_N1N2MessageTransfer message to the AMF, where the message includes a common identity security policy and/or a non-common identity security policy. The non-common identity includes a relay identity or a remote identity.

In a possible case, if the message carries only one security policy, it indicates that the security policy can be used not only for common access, but also for remote (remote) identity and/or relay identity access (if the UE supports these identities).

In another possible case, if the message carries two security policies, one of the security policies represents a security policy used by a common identity, and the other represents a security policy used by a non-common identity.

In still another possible case, if the message carries three security policies, the three security policies respectively represent a security policy used for a common identity, a security policy used for a remote identity, and a security policy used for a relay identity.

In embodiments of this application, when all UEs can have a remote identity, the remote identity may be one type of common identity. In this case, the non-common identity includes only a relay identity. If not all UEs can have a remote identity, the non-common identity includes the relay identity and the remote identity.

Step 306: The AMF forwards the security policy of the terminal device to the UE.

Step 307: The terminal device receives the security policy, and store the security policy in a local device.

It is to be noted that the PCF may alternatively be another network element that can provide security. The network element that provides a security policy is a network element or a functional entity that allocates a policy on a network side, for example, a PCF in 5G, a policy and charging rules function (policy and charging rules function, PCRF) in 4G, and a network element that inherits a related function in a future network.

In a possible embodiment, in step 304, the security policy of the terminal device determined by the PCF may have a plurality of granularities. For example, the granularity may be a PCF granularity, that is, all terminal devices that send a request to the PCF correspond to a same security policy. In another example, the granularity may be a UE granularity, that is, different terminal devices may correspond to different security policies. In another example, the granularity may be an APP granularity, that is, terminal devices corresponding to different APP IDs may correspond to different security policies. In another example, the granularity may be a UE+APP granularity, that is, different UE+APP binding relationships, and terminal devices may correspond to different security policies.

It is to be noted that although the security policy may be classified into a security policy of a common identity and a security policy of a non-common identity, security policies of terminal devices with different identities may be the same or may be different. For example, security policies corresponding to terminal devices with two identities, remote UE and relay UE, may be the same or may be different.

In addition, the security policy may alternatively be separately bound to a remote identity or a relay identity and then stored, that is, security policies of two identities are stored. For example, a security policy of UE-1 includes a security policy of a remote identity and a security policy of a relay identity. For example, the security policy of the common identity includes that control plane confidentiality protection is PREFERRED, control plane integrity protection is REQUIRED, user plane confidentiality protection is NOT NEEDED, and user plane integrity protection is REQUIRED; and the security policy of the non-common identity includes that control plane confidentiality protection is PREFERRED, control plane integrity protection is PREFERRED, user plane confidentiality protection is PREFERRED, and user plane integrity protection is PREFERRED. Certainly, if security policies with different identities of the UE-1 are the same, security policies of only one identity may be stored. For example, control plane confidentiality protection is PREFERRED, control plane integrity protection is PREFERRED, user plane confidentiality protection is PREFERRED, and user plane integrity protection is PREFERRED. This embodiment does not limit a storage manner. That is, in a specific implementation process, only one of the implementations may be used, or a plurality of implementations may coexist.

In a possible embodiment, a method for ensuring link establishment is as follows: in a security policy configuration manner, a security policy used by a common identity (similar to a security policy used in a one-to-one communication (one-to-one communication) procedure in V2X) may include two states: an enabled state and a disabled state. For example, control plane confidentiality protection is enabled, control plane integrity protection is optional, user plane integrity protection is disabled, and user plane confidentiality protection is optional. The security policy used by a non-common identity includes only optional security policies. That is, only the "PREFERRED" state is included, and the "REQUIRED" state and the "NOT NEEDED" state are not included.

Advantageously, it is to ensure that a message link can be established in a communication scenario including a relay. In the conventional technology, if security policies of any two of the UE-1, the UE-2, and the relay shown in FIG. 2B are in opposite states (for example, a control plane confidentiality security policy of the UE-1 is in a REQUIRED state, and a control plane confidentiality security policy of the UE-2 is in a NOT NEEDED state), the UE-2 or the relay releases a connection. Therefore, a link cannot be established. Therefore, if the security policy of the relay includes a disabled state and an optional state, a message link in a relay scenario may fail to be established because the relay has a clear security policy.

Another method for ensuring link establishment is to allocate the same security policy that does not include the "PREFERRED" state to UEs having a common attribute. "Having a common attribute" means that the UEs have a same service granularity, or other attribute information is the same, where the other attribute information may be attribute information for classifying some UEs into one group. In this way, a relay is used only in a range of these UEs to establish a service, so that it can be avoided that a link cannot be established due to the relay.

In addition, in a possible embodiment, the PCF further stores at least one of a security endpoint policy and a security algorithm policy, and the security policy of the terminal device determined by the PCF may further include at least one of a security endpoint policy of the terminal device and a security algorithm policy of the terminal device.
(1) The security endpoint policy is whether a security endpoint should or prefers to be placed on the relay or should not or does not prefer to be placed on the relay. "should" is a mandatory action that must be satisfied. The meaning of "prefer" is that an action is optional and may not be satisfied.

For example, when bit information has only one bit and the value is 0, it indicates that the security endpoint should or prefers to be placed on the relay, and when the value is 1, it indicates that the security endpoint should not or does not prefer to be placed on the relay. In another example, when the bit information has at least two bits, 00 indicates that the security endpoint must be placed on the relay, 01 indicates that the security endpoint prefers to be placed on the relay, 10 indicates that the security endpoint prefers not to be placed on the relay, and 11 indicates that the security endpoint must not be placed on the relay. In another example, a character string "end", "hop", and "prefer" may be for respectively indicating that the security endpoint must not be placed on the relay, must be placed on the relay, and prefers to be placed on the relay.

(2) The security algorithm policy means whether a 128-bit algorithm or a 256-bit algorithm should or prefers to be used, and may be represented by using bit indication information, or may be represented by using a character string.

For example, when the bit information has only one bit, 0 indicates that the 128-bit algorithm should be or prefers to be used, and 1 indicates that the 256-bit algorithm should be or prefers to be used. In another example, when the bit information has at least two bits, 00 indicates that the 128-bit algorithm must be used, 01 indicates that the 128-bit algorithm prefers to be used, 10 indicates that the 256-bit algorithm prefers to be used, and 11 indicates that the 256-bit algorithm must be used. In another example, character strings 128, 256, and prefer respectively indicate that the 128-bit algorithm must be used, the 256-bit algorithm must be used, and both the algorithms may be used.

The security endpoint policy and the security algorithm policy may use granularity information the same as that of the security policy, that is, the granularity of these security policies is the same as the granularity of the security policy, or may use granularity information different from that of the security policy, that is, the granularity of these security policies is different from that of the security policy. This is not specified in this embodiment.

The granularity information of the security policy is a range in which the security policy can be applied. For example, when the security policy is at a granularity of an APP ID, it means that a security policy corresponding to an APP ID cannot be used for another APP ID. In another example, when the security policy is at a granularity of UE, it means that all services of the UE use the same security policy. The present invention is not limited to that the PCF stores a single security policy for the UE. In other words, the PCF may store only a security policy at a granularity of UE for some UEs. Alternatively, only a security policy at a granularity of an APP ID may be stored for the UE. Alternatively, security policies at different granularities may be stored for the UE. For example, a security policy corresponding to an APP ID and a corresponding security policy other than the APP ID are stored for UE. In this case, the corresponding security policy other than the APP ID may be understood as a policy at a granularity of UE.

Optionally, in step 305, the response message may further carry granularity information of the security policy. For example, each ProSe APP ID has a corresponding security policy. There are the following several possible representation methods by combining the security policy with the granularity information. The following representation methods may be used for storage of the UE and the PCF, and are used for the representation method of network elements transmitted in the message in step 305. A use scenario of the representation method is not limited in embodiments of this application.
(1) {security policy of a common identity, security policy of a non-common identity = (security policy of a ProSe APP ID-1, security policy of a ProSe APP ID-2, default security policy)}. This method means that there is a security policy of a common identity. The security policy is used when the UE is not used as a remote UE or a relay UE. When all UEs can be used as remote UEs, the security policy is a security policy used only when the UE is not used as relay UE. A security policy of a non-common identity whose ProSe APP ID is 1, a security policy of a non-common identity whose ProSe APP ID is 2, and a default security policy of a non-common identity are further included. When the non-common identity includes two types: the remote identity and the relay identity, the security policy of the ProSe APP ID-1 may include at least one security policy of the non-common identity. For example, for the ProSe APP ID-1, only the security policy of the relay identity corresponding to the ProSe APP ID-1 may be included, or both the security policy of the relay identity corresponding to the ProSe APP ID-1 and the security policy of the remote identity corresponding to the ProSe APP ID-1 may be included. It is to be noted that the method ProSe APP ID represents granularity information corresponding to a security policy. Therefore, it may be understood that if the PC5 security granularity is not the granularity of the ProSe APP ID, the ProSe APP ID may be replaced with the granularity corresponding to the security policy. For example, if the UE granularity is used, the ProSe APP ID may be changed to the SUPI.

If the security policy of the ProSe APP ID-1 includes only one security policy, it may be understood that the security policy may be used by two identities.

If the security policy is further expressed as: { security policy of a common identity, security policy of a non-common identity = (security policy of a relay identity of the ProSe APP ID-1, security policy of a remote identity of the ProSe APP ID-2, default security policy)}, it may be understood that the security policy includes the security policy of the relay identity of the ProSe APP ID-1, the security policy of the remote identity of the ProSe APP ID-2, and the default security policy of the non-common identity other than the ProSe APP ID-1 and the ProSe APP ID-2. In this case, if the UE can use the remote identity in the ProSe APP ID-1, the security policy of the remote identity is the default security policy of the non-common identity. Similarly, if the ProSe APP ID-2 can use the relay identity, the security policy of the relay identity of the ProSe APP ID-2 is the default security policy of the non-common identity.

(2) {ProSe APP ID-1 = (security policy of a common identity, security policy of a non-common identity), ProSe APP ID-2 = (security policy of a common identity, security policy of a non-common identity), default security policy}. In the representation method, the ProSe APP ID-1 and the ProSe APP ID-2 represent granularity information. The method indicates the security policy of the common identity and the security policy of the non-common identity that can be used in the ProSe APP ID-1, the security policy of the common identity and the security policy of the non-common identity that can be used in the ProSe APP ID-2, and the default security policy that can be used by any identity of other APPs. For detailed description, refer to the description in the method (1).

(3) {ProSe APP ID-2 = (security policy of a common identity, security policy of a non-common identity), default security policy of a non-common identity, default security policy of a common identity}. The method indicates the security policy of the common identity and the security policy of the non-common identity that can be used in the ProSe APP ID-2 and the default security policy that can be used by the common identity and the default security policy that can be used by the non-common identity in another ProSe APP. For detailed description, refer to the description in the method (1).

(4) {security policy of a common identity, security policy of a non-common identity}. The method indicates a security policy used by a common identity and a security policy used by a non-common identity of the UE in a case of a UE granularity. The security policy of the non-common identity may include at least one of a security policy of a remote identity and a security policy of a relay identity. The type of information to be carried is determined by identity indication information carried in a request of the UE. If both the identities are carried, both the security policies of the non-common identity need to be carried.

(5) { security policy of a common identity, security policy of a relay identity}. The representation method indicates the security policy of the common identity and the security policy of the relay identity of the UE in a case of a UE granularity. This representation method is applicable to a scenario in which all UEs have remote identities. In this case, the remote identity is one type of common identity. That is, the security policy of the common identity may be reused.

(6) {Security policy}: The representation method indicates that in a case of a UE granularity, the security policies of the common identity, the remote identity, and the relay identity of the UE use the same security policy.

The security policy of the non-common identity includes at least one of the security policy of the relay identity and the security policy of the remote identity.

In embodiments of this application, in a scenario in which the terminal device performs communication via the relay, the PCF configures a security policy for the terminal device. For example, the PCF preferentially configures the security policy of the relay as a PREFERRED security policy. In this way, establishment of a PC5 link of the relay can be ensured. In addition, the security policy may further include granularity information, to ensure an application range of the security policy. It should be noted that there are various binding relationships between a security policy and a granularity. Embodiments of this application provide only some reference examples. A manner of using the security policy and the granularity is not limited in embodiments of this application.

### Part 2

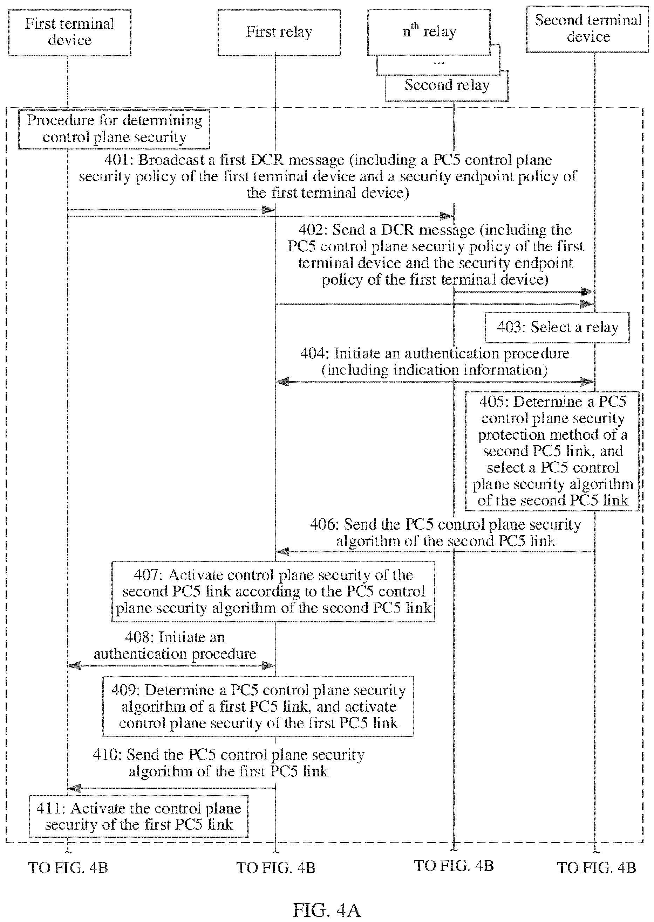

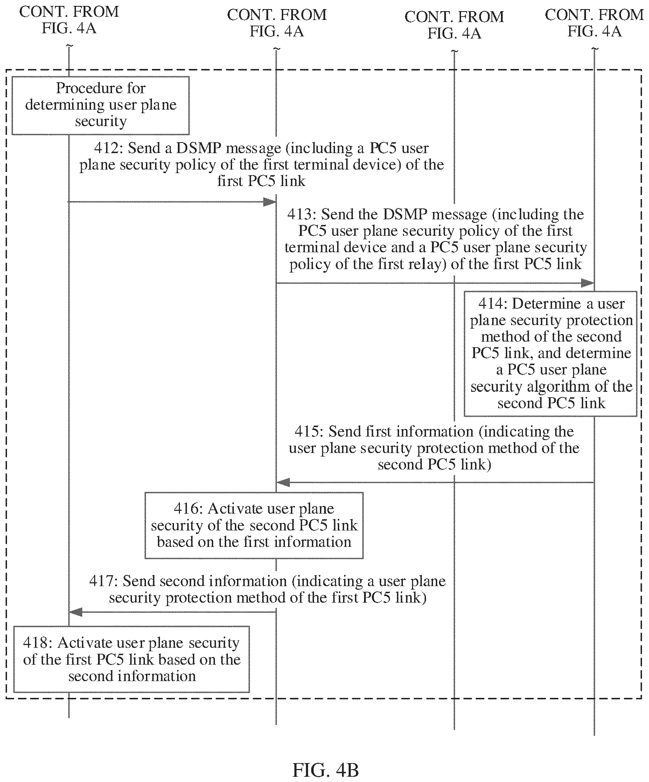

With reference to Part 1, embodiments of this application provide a secure communication method. FIG. 4A and FIG. 4B are a flowchart of the method. The following provides a description by using an example in which the method is used in the system architecture shown in FIG. 2A or FIG. 2B. In addition, the method may be performed by a first communication apparatus. The first communication apparatus may be a terminal device, or a communication apparatus that can support a terminal device in implementing functions required for the method, for example, a component included in the terminal device, or a chip system in the terminal device.

For ease of description, the following describes in detail a cell selection method provided in embodiments of this application by using an example in which the method is performed by the terminal device.

FIG. 4A and FIG. 4B are a schematic flowchart of a secure communication method according to an embodiment of this application. The method may include the following steps.

Step 401: A first terminal device broadcasts a first direct communication request (direct communication request, DCR) message.

The first DCR message carries a PC5 control plane security policy of the first terminal device.

In a possible embodiment, the first DCR message may further carry a security endpoint policy of the first terminal device, and the security endpoint policy is for determining whether a security endpoint is on a relay. For example, when the first DCR message carries a "hop-by-hop" security endpoint policy, the security endpoint is on the relay; or when the first DCR message carries an "end-to-end" security endpoint policy, the security endpoint is not on the relay. Optionally, in a possible embodiment, the first DCR message may further include a security algorithm policy.

The PC5 control plane security policy of the first terminal device carried in the first DCR message is a PC5 control plane security policy of a remote identity. When the first terminal device obtains only one PC5 control plane security policy from a network side, the PC5 control plane security policy of the first terminal device carried in the first DCR message is obtained from the network side according to the embodiment in FIG. 3.

In a possible embodiment, the first DCR message may further carry granularity information (for example, an APP ID) of the PC5 control plane security policy of the first terminal device, and the granularity information is used in an application range of the PC5 control plane security policy of the first terminal device.

The first DCR message is a broadcast message, and may be received by different relays. The PC5 control plane security policy may include at least one of a PC5 control plane security policy of a common identity and a PC5 control plane security policy of a non-common identity.

In a possible embodiment, the message may further carry a PC5 control plane security algorithm supported by the first terminal device, so that a second terminal device determines a PC5 control plane security algorithm of a second PC5 link.

Step 402: After receiving the first DCR message, at least one relay sends a second DCR message to the second terminal device, where the second DCR message is generated and sent by the at least one relay.

In an implementation, the second DCR message may be directly the first DCR message. To be specific, the at least one relay directly forwards the first DCR message to the second terminal device.

In another implementation, the second DCR message may also include related information of the relay and related information of the first terminal device. The related information of the first terminal device comes from the first DCR message. The related information of the first terminal device may be the entire first DCR message or a part of the first DCR message. The related information of the relay may include a PC5 control plane security policy of the relay, a PC5 control plane security algorithm of the relay, and the like.

In a possible embodiment, before forwarding the second DCR message to the second terminal device, the relay needs to first determine whether the relay can serve the first terminal device. It is to be noted that, the determining process may occur before step 401 or after step 401. For example, before the first terminal device sends the second DCR message, the relay can determine, by using a discovery (discovery) procedure, whether the relay can serve the first terminal device. If the relay can serve the first terminal device, the relay receives the first DCR message and generates the second DCR message. If the relay cannot serve the first terminal device, the relay directly rejects the first DCR message. In another example, when there is no discovery (discovery) procedure, after receiving the first DCR message, the relay first determines, based on information in the message, whether the relay can serve the first terminal device. If the relay can serve the first terminal device, the relay receives the first DCR message and generates the second DCR message; or if the relay cannot serve the first terminal, the relay directly rejects the first DCR message. For example, the determining is performed based on application layer ID information carried in the message. This embodiment does not limit a quantity of the at least one relay. There may be one relay or more than two relays.

In a possible embodiment, the at least one relay determines whether a control plane security policy of the first terminal device can be supported, and if the control plane security policy of the first terminal device can be supported, generates the second DCR message and sends the second DCR message to the second terminal device. If the control plane security policy of the first terminal device is not supported, the second DCR message does not need to be generated for the first terminal device. Specifically, the at least one relay determines whether a PC5 control plane confidentiality protection policy and a PC5 control plane integrity protection policy of the relay conflict with a PC5 control plane confidentiality security policy of the first terminal device. For example, assuming that the PC5 control plane security policy of the first terminal device is that PC5 control plane confidentiality protection is NOT NEEDED and PC5 control plane integrity protection of the first terminal device is REQUIRED, the first terminal device cannot select a relay whose PC5 control plane confidentiality protection is REQUIRED or whose PC5 control plane integrity protection is NOT NEEDED. NOT NEEDED conflicts with REQUIRED.

In a possible embodiment, the relay may further send at least one of a PC5 control plane security policy, a security endpoint policy, and a security algorithm policy of the relay to the second terminal device. It should be noted that a carrying manner of the relay-related security policy and the like varies with a format of the second DCR message. For example, if the second DCR message sent by the relay is a DCR message directly forwarded to the first terminal device, the relay-related security policy may be carried in the DCR message forwarded by the relay to the second terminal device; or when the first DCR message or a part of the first DCR message is used as a container (content), an IE, or some IEs of the second DCR message, the relay-related security policy may be carried in an IE that is of the relay and that is not related to the first DCR message. This is not limited in this embodiment. It should be noted that the second DCR message may further carry a control plane security algorithm supported by the first terminal device and/or a control plane security algorithm supported by the relay. For a specific carrying method, refer to the foregoing related description of the method for carrying a security policy.

Step 403: The second terminal device determines, from the at least one relay, a relay for serving the first terminal device.

It is to be noted that, in this embodiment, step 403 is an optional step. In a possible case, when only one relay forwards a DCR message to the second terminal device, step 403 may not be performed. In this case, the second terminal device only needs to determine whether the relay supports the service, and if the relay supports the service, determines that the relay is a relay that can serve the first terminal device. For example, the second terminal device performs determining based on whether the second terminal device is interested in application information carried in the message.

In another possible case, when more than two relays forward DCR messages to the second terminal device, the second terminal device determines, from the at least two relays according to at least one of the PC5 control plane security policy of the first terminal device, PC5 control plane security policies of the at least two relays, a PC5 control plane security policy of the second terminal device, the security endpoint policy of the first terminal device, security endpoint policies of the at least two relays, the security endpoint policy of the second terminal device, a security algorithm policy of the first terminal device, security algorithm policies of the at least two relays, and a security algorithm policy of the second terminal device that are received, a relay that serves the first terminal device.

It is to be noted that, in a possible implementation, because different relays forward the DCR messages to the second terminal device in a time sequence, the second terminal device may determine, from the at least two relays based on a sequence of receiving the forwarded messages from the different relays, one relay that serves the first terminal. For example, assuming that the second terminal device first receives a second DCR message sent by a first relay, the second terminal device may determine, according to at least one of the PC5 control plane security policy of the first terminal device, a PC5 control plane security policy of the first relay, the PC5 control plane security policy of the second terminal device, the security endpoint policy of the first terminal device, a security endpoint policy of the first relay, a security endpoint policy of the second terminal device, the security algorithm policy of the first terminal device, a security algorithm policy of the first relay, and the security algorithm policy of the second terminal device, whether the first relay can be used to establish a PC5 link. If the first relay can be used to establish a PC5 link, the first relay is determined as a target relay, and the first relay may be used to establish a PC5 link; or if the first relay cannot be used to establish a PC5 link, the foregoing determining is performed on other relays in sequence based on a time sequence of receiving.

In another possible implementation, the second terminal device may randomly select a second DCR message sent by one relay for determining. The rest may be deduced by analogy, until a target relay that satisfies a condition is determined. A specific selection sequence of a relay in determining is not limited in embodiments of this application.

Specifically, the second terminal device may determine the target relay in at least one of the following manners.

Manner 1: The second terminal device determines the target relay based on a security endpoint of the second terminal device.

For example, if the security endpoint policy preconfigured by the second terminal device or obtained from the network side is hop-by-hop (hop-by-hop), the second terminal device can only select one target relay that supports a "hop-by-hop" security policy or supports a "PREFERRED" security policy from the at least two relays. In another example, if the security endpoint policy preconfigured by the second terminal device or obtained from the network side is end-to-end (End-to-End), the second terminal device can only select one target relay that supports an End-to-End security policy or supports a PREFERRED security policy from the at least two relays.

Manner 2: The second terminal device determines the relay according to a PC5 control plane security policy of each terminal device in each combination.

It is assumed that two relays (the first relay and a second relay) send the second DCR message to the second terminal device. In this case, there are two combinations. The first combination includes the first terminal device, the first relay, and the second terminal device. The second combination includes the first terminal device, the second relay, and the second terminal device.

For example, if the PC5 control plane security policy preconfigured by the second terminal device includes a disabled PC5 control plane security policy (that is, at least one of control plane confidentiality protection and control plane integrity protection is NOT NEEDED), the second terminal device cannot select a relay that conflicts with the PC5 control plane security policy preconfigured by the second terminal device (that is, at least one of corresponding control plane confidentiality protection and control plane integrity protection is REQUIRED). For example, it is assumed that the PC5 control plane security policy of the second terminal device is that PC5 control plane confidentiality protection is NOT NEEDED and PC5 control plane integrity protection is REQUIRED. In this case, the second terminal device cannot select a relay whose PC5 control plane confidentiality protection is REQUIRED or whose PC5 control plane integrity protection is NOT NEEDED. NOT NEEDED conflicts with REQUIRED. Further, optionally, if the second terminal device first determines that the security endpoint is hop-by-hop, the second terminal device selects a relay according to the foregoing steps. In contrast, if the preconfigured security endpoint of the second terminal device is end-to-end security, the relay does not need to refer to the PC5 control plane security policy of the relay during relay selection. In this case, the control plane security protection method for the first terminal device may be determined according to clause 5.3.3.1.4.3 in the 3GPP standard TS 33.536.

Manner 3: The second terminal device determines a relay according to the PC5 control plane security policy of each device in each combination, a PC5 user plane security policy of the first terminal device, and a PC5 user plane security policy of the second terminal device.

In other words, if the principle is that user plane security protection cannot be higher than control plane security protection, to ensure establishment of a PC5 connection, when the second terminal device selects a relay, the PC5 user plane security policy of the second terminal device may be used. A specific meaning of that the user plane security protection cannot be higher than the control plane security protection includes the following several aspects: (1) If the control plane confidentiality protection is activated, the user plane confidentiality protection may be activated or may not be activated. (2) If the control plane integrity protection is activated, the user plane integrity protection may be activated or may not be activated. (3) If the control plane confidentiality protection is not activated, the user plane confidentiality protection is not activated. (4) If the control plane integrity protection is not activated, the user plane integrity protection is not activated.

Specifically, Principle 1: if the PC5 user plane security policy of the second terminal device is in a "REQUIRED" state, correspondingly, the PC5 control plane security policy of the relay selected by the second terminal device should also be in a "REQUIRED" state. For example, if PC5 user plane confidentiality protection and/or PC5 user plane integrity protection of the second terminal device are/is in a "REQUIRED" state, the second terminal device can only select a relay whose PC5 control plane confidentiality protection and/or PC5 control plane integrity protection are/is "REQUIRED". Principle 2: If the PC5 user plane security policy of the second terminal device is in a "NOT NEEDED" state, correspondingly, the PC5 control plane security policy of the relay selected by the second terminal device cannot be "REQUIRED". For example, if the PC5 user plane confidentiality protection and/or PC5 user plane integrity protection are/is in a "NOT NEEDED" state, the second terminal device can only select a relay whose PC5 control plane confidentiality protection and/or PC5 control plane integrity protection are/is not "REQUIRED".

Manner 4: The second terminal device determines a relay according to the security algorithm policy of the relay and the security algorithm policy of the second terminal device.

Specifically, in Principle 1, when the second terminal device supports only a 128-bit algorithm, the second terminal device cannot select a relay that supports only a 256-bit algorithm. In Principle 2, when the second terminal device supports only a 256-bit algorithm, the second terminal device cannot select a relay that supports only a 128-bit algorithm.

It should be noted that an execution sequence of the three policies, namely, the PC5 user plane security policy, the PC5 control plane security policy, and the security endpoint policy, is not limited in embodiments of this application. In addition, because some security policies are optional, the three policies may not be executed. A combination and a use method of the three security policies are not limited in embodiments of this application.

It is to be additionally noted that if the security endpoint policy is specified in the standard, that is, the standard specifies that only hop-by-hop or end-to-end can be used, the security endpoint policy is disabled, and other steps must be performed according to related rules by default.

It is assumed that the first DCR message sent by the first terminal device includes that the security endpoint policy of the first terminal device is a "hop-by-hop" security policy, and the target relay is the first relay. In the following description, the security endpoint is located on the target relay.

Step 404: After determining the first relay, the second terminal device initiates an authentication procedure with the first relay.

It is to be noted that in this embodiment, step 404 is an optional step of this embodiment.

A function of the authentication procedure is to complete mutual trust between the second terminal device and the first relay, and generate a root key for protecting a control plane key and a user plane key. For a specific description, refer to descriptions in clause 5.3.3.1.4.3 in the standard TS 33.536.

For example, the second terminal device sends a direct authentication and key establishment (Direct Auth and Key Establishment) message to the first relay, to trigger the authentication procedure between the second terminal device and the first relay.

Optionally, the first relay may determine that the direct auth and key establishment message is sent to the first relay, and the first relay initiates an authentication and key generation procedure with the second terminal device after receiving the message. Specifically, the first relay may be determined in at least two of the following manners. In one manner, the direct auth and key establishment message includes indication information, or indication information is sent to the second terminal device with the direct auth and key establishment message (in this case, it may be understood that the indication information is not included in the direct auth and key establishment message), and the indication information indicates that authentication and key distribution are performed between the second terminal device and the first relay. For example, one bit indicates whether the message is sent to the first relay or the first terminal device. Specifically, when the bit of the indication information is "0", it indicates that the message is sent to the first relay, and when the bit of the indication information is "1", it indicates that the message is sent to the first terminal device. In another manner, the first relay determines, according to the format of the direct auth and key establishment message, that authentication and key distribution are performed between the second terminal device and the first relay. For example, if direct auth and key establishment is sent to the first relay as a part of a container, the first relay sends the direct auth and key establishment message in the container to the first terminal device. In this case, the first relay may not know content in the container, that is, does not know that the content is the direct auth and key establishment message. In other words, the first relay directly forwards the container. In another example, if the direct auth and key establishment message is directly sent to the first relay, the first relay automatically determines that the message is sent to the first relay instead of the first terminal device.

It is to be additionally noted that if the security endpoint policy is specified in the standard, that is, the standard specifies that only hop-by-hop or end-to-end can be used, the first relay does not need to determine whether the direct auth and key establishment message is sent to the first relay or the first terminal device. That is, the standard specifies that in a hop-by-hop case, the first relay knows that the direct auth and key establishment message is sent to the first relay, and in an end-to-end case, the first relay knows that the direct auth and key establishment message is sent to the first terminal device. The knowing method is not limited in embodiments of this application. It should be noted that when the PC5 control plane security policy of the second terminal device is in a "NOT NEEDED" state and when the PC5 control plane security policy of the first relay, the PC5 control plane security policy of the first terminal device, and the PC5 control plane security policy of the second terminal device conflict with each other, step 404 is not initiated, and the second terminal device returns a failure message to the at least one relay to reject establishment of a DCR procedure.

Step 405: The second terminal device determines a PC5 control plane security protection method of the second PC5 link, and selects a PC5 control plane security algorithm of the second PC5 link.

This step may be performed after step 403 and before step 404.

Specifically, the second terminal device may determine the PC5 control plane security protection method of the second PC5 link in at least one of the following manners:
Manner 1: The second terminal device determines the PC5 control plane security protection method of the second PC5 link according to the PC5 control plane security policy of the first relay and the PC5 control plane security policy of the second terminal device. For a specific determining method, refer to descriptions in clause 5.3.3.1.4.3 in the standard TS 33.536.

For example, PC5 control plane integrity protection of the first relay is optional, PC5 control plane confidentiality protection of the first relay is enabled, PC5 control plane integrity protection of the second terminal device is enabled, and PC5 control plane confidentiality protection of the second terminal device is enabled. In this case, the second terminal device determines that PC5 control plane integrity protection of the second PC5 link is enabled and PC5 control plane confidentiality protection of the second PC5 link is enabled.

Manner 2: In addition to the PC5 control plane security policy of the first relay and the PC5 control plane security policy of the second terminal device, the second terminal device further determines the PC5 control plane security protection method of the second PC5 link with reference to the PC5 control plane security policy of the first terminal device. In this way, the PC5 control plane security protection method between the first relay and the second terminal device may be the same as the PC5 control plane security protection method between the first relay and the first terminal device.

Specifically, when one of the control plane integrity protection is REQUIRED, it is determined that the control plane integrity protection needs to be activated. When one of the control plane confidentiality protection is REQUIRED, it is determined that the control plane confidentiality protection needs to be activated. When one of the control plane integrity protection is NOT NEEDED, it is determined that the control plane integrity protection does not need to be activated. When one of the control plane confidentiality protection is NOT NEEDED, it is determined that the control plane confidentiality protection does not need to be activated. When all the control plane integrity protection is PREFERRED, it is determined that the control plane integrity protection may be activated or may not be activated. When one of the control plane confidentiality protection is PREFERRED, it is determined that the control plane confidentiality protection may be activated or may not be activated.

Manner 3: The second terminal device may further determine the PC5 control plane security protection method according to the PC5 control plane security policy of the first relay and the PC5 control plane security policy of the second terminal device with reference to the PC5 user plane security policy of the second terminal device.

For example, if the second terminal device determines that the PC5 user plane security policy of the second terminal device is in a "REQUIRED" state, the PC5 control plane security policy of the first relay may support REQUIRED (for example, PREFERRED or REQUIRED), and the PC5 control plane security policy of the second terminal device may support REQUIRED (for example, PREFERRED or REQUIRED), it is determined that the PC5 control plane security policy of the second PC5 link is in an enabled state. Specifically, if PC5 user plane integrity protection of the second terminal device is REQUIRED, the second terminal device determines that the control plane integrity protection is enabled. If the user plane integrity protection of the second terminal device is PREFERRED, for a method for determining the control plane integrity protection, further refer to user plane confidentiality protection of the second terminal device. That is, if the user plane confidentiality protection of the second terminal device is REQUIRED, it is determined that the control plane integrity protection is enabled, and the control plane confidentiality protection is REQUIRED. If the user plane confidentiality protection of the second terminal device is PREFERRED or NOT NEEDED, the second terminal device may determine that the control plane integrity protection is enabled or disabled, and may determine that the control plane confidentiality protection is enabled or disabled. If the user plane integrity protection of the second terminal device is NOT NEEDED, for a method for determining the control plane integrity protection, further refer to the user plane confidentiality protection of the second terminal device. To be specific, if the user plane confidentiality protection of the second terminal device is REQUIRED, connection establishment is rejected. If the user plane confidentiality protection of the second terminal device is PREFERRED or NOT NEEDED, the second terminal device may determine that the control plane integrity protection is enabled or disabled, and determine that the control plane confidentiality protection is enabled or disabled.

After determining whether to activate the PC5 control plane security protection method of the second PC5 link, the second terminal device may select a PC5 control plane security algorithm. The security algorithm includes a confidentiality protection algorithm and/or an integrity protection algorithm. If it is determined that the PC5 control plane integrity protection of the second PC5 link needs to be activated, a non-null PC5 control plane integrity security algorithm needs to be selected. For example, when it is determined that the PC5 control plane integrity protection of the second PC5 link needs to be activated and it is determined that the PC5 control plane confidentiality protection of the second PC5 link needs to be activated, a non-null PC5 control plane confidentiality protection algorithm and a non-null PC5 control plane integrity protection algorithm need to be selected. If it is determined that PC5 control plane integrity protection of the second PC5 link is not activated, the PC5 control plane integrity protection algorithm does not need to be selected. Optionally, if there is a security algorithm policy, the second terminal device selects a 128-bit algorithm or a 256-bit algorithm according to the security algorithm policy. For a specific selection method, refer to descriptions in clause 5.3.3.1.4.3 in the standard TS 33.536.

Step 406: The second terminal device sends the PC5 control plane security algorithm of the second PC5 link to the first relay.

Before performing step 406, the second terminal device activates the security protection method determined in step 405. Specifically, if the PC5 control plane integrity protection is enabled, integrity protection is performed on the message in step 406 by using the PC5 control plane integrity protection algorithm and the PC5 control plane integrity protection key. If it is determined that the PC5 control plane confidentiality protection is enabled, a PC5 control plane confidentiality protection algorithm and a PC5 control plane confidentiality key that are selected start to be used to prepare for de-confidentiality protection on the received message. For a PC5 control plane algorithm and a PC5 control plane key, refer to a related control plane algorithm and control plane key mentioned in the clause 5.3.3.1.4.3 in the standard TS 33.536.

A method for determining the PC5 control plane security algorithm is as follows. The second terminal device stores a priority list of control plane integrity protection algorithms, and the second terminal device may select, from the control plane security algorithms that are supported by the first terminal device and/or the first relay and that are carried in step 402, a control plane security algorithm with the highest priority and that is also supported. For example, the first terminal device supports NIA0 (Next-generation Integrity Algorithm, next-generation integrity protection algorithm), NIA1, NIA2, and NIA3, the first relay supports NIA0, NIA2, and NIA3, and a priority list of the second terminal device is NIA1, NIA3, and NIA2. When only the first terminal device and the second terminal device are considered, the selected control plane integrity protection algorithm is NIA1. When only the first relay and the second terminal device are considered, the selected control plane integrity protection algorithm is NIA3. When the first relay, the first terminal device, and the second terminal device are considered, the selected control plane integrity protection algorithm is NIA2. In another example, the first terminal device supports NEA0 (Next-generation Encryption Algorithm, next-generation encryption algorithm), NEA1, NEA2, and NEA3, the first relay supports NEA0, NEA2, and NEA3, and a priority list of the second terminal device is NEA1, NEA3, and NEA2. When only the first terminal device and the second terminal device are considered, the selected control plane integrity protection algorithm is NEA1. When only the first relay and the second terminal device are considered, the selected control plane integrity protection algorithm is NEA3. When the first relay, the first terminal device, and the second terminal device are considered, the selected control plane integrity protection algorithm is NEA2.

For example, the second terminal device sends direct security communication mode signaling (direct security mode command, DSMC) message to the first relay, where the message carries the control plane security algorithm of the second PC5 link determined by the second terminal device. For a specific carrying method, refer to descriptions in clause 5.3.3.1.4.3 in the standard TS 33.536.

Step 407: The first relay activates control plane security of the second PC5 link according to the received control plane security algorithm of the second PC5 link. Specifically, the first relay activates control plane security protection of the second PC5 link according to the PC5 control plane security algorithm carried in step 406. For a specific activation method, refer to descriptions in clause 5.3.3.1.4.3 in the standard TS 33.536.

For example, if the control plane security algorithm of the second PC5 link includes a non-null integrity protection algorithm and a null confidentiality protection algorithm, for the first relay, the control plane integrity protection of the second PC5 link is enabled, and the control plane confidentiality protection of the second PC5 link is disabled. For a specific activation method, refer to descriptions in clause 5.3.3.1.4.3 in the standard TS 33.536.

Step 408: The first relay performs an authentication procedure with the first terminal device. For example, the first relay sends the direct auth and key establishment message to the first terminal device to initiate an authentication and key generation procedure. For details, refer to the description in step 404. Details are not described herein again.

In a possible embodiment, optionally, before step 408, the first relay needs to determine whether the first relay may cause a conflict with the control plane security policy of the first terminal device. When no conflict is caused, the first relay performs the following steps. Otherwise, the connection is released. If the first relay has performed determining in step 402, the determining process does not need to be performed again.

Step 409: The first relay determines a PC5 control plane security algorithm of the first PC5 link, and activates control plane security of the first PC5 link.

The first PC5 link is a PC5 link between the first terminal device and the first relay.

In a possible embodiment, the first relay may use a control plane security protection method between the first relay and the second terminal device as a PC5 control plane security protection method of the first PC5 link. Specifically, the first relay may use, based on the determining result in step 407, the determining result on the first PC5 link.

In another possible embodiment, the first relay may determine a control plane security protection method between the first terminal device and the first relay as the PC5 control plane security protection method of the first PC5 link. The security protection method may be the same as or different from a control plane security protection method between the first relay and the second terminal device. That is, the first PC5 link and the second PC5 link are independent of each other.

Further, optionally, before the first relay determines whether to activate a control plane security protection method of the first PC5 link, the first relay checks whether the control plane security protection method conflicts with the PC5 control plane security policy of the first terminal device. If the control plane security protection method conflicts with the PC5 control plane security policy of the first terminal device, the first relay releases the connection. If the control plane security protection method does not conflict with the PC5 control plane security policy of the first terminal device, the first relay determines the control plane security protection method between the first relay and the second terminal device as the PC5 control plane security protection method of the first PC5 link.

After the PC5 control plane security protection method is determined, further, the first relay selects the PC5 control plane security algorithm of the first PC5 link, and activates the control plane security of the first PC5 link. Manner 1: The first relay may determine whether the control plane security algorithm selected by the second terminal device can be directly used. If the control plane security algorithm can be directly used, the second terminal device uses the control plane security algorithm as the PC5 control plane security algorithm of the first PC5 link. If the control plane security algorithm cannot be directly used, the algorithm selection is performed again. A further determining method is mainly to check whether an algorithm selected by the second terminal device has the highest priority supported by the first relay. If the algorithm selected by the second terminal device has the highest priority supported by the first relay, it is determined that the algorithm can be used. If the algorithm selected by the second terminal device does not have the highest priority supported by the first relay, the first relay needs to select a security algorithm (a confidentiality protection algorithm and/or an integrity protection algorithm) that is supported by the UE-1 and has the highest priority supported by the first relay. Manner 2: The first relay determines the security algorithm of the first PC5 link according to the description in step 406.

Step 410: The first relay sends the control plane security algorithm of the first PC5 link to the first terminal device.

Before step 410, the first relay activates control plane security protection between the first terminal device and the first relay. For the activation method, refer to step 406.

For example, the first relay sends a direct security mode command message to the first terminal device, and the message carries the control plane security algorithm of the first PC5 link.

Step 411: The first terminal device activates PC5 control plane security of the first PC5 link according to the received control plane security algorithm.

In embodiments of this application, step 401 to step 411 are a process of determining a control plane security protection method for a PC5 link between terminal devices. According to the foregoing method, consistency of control plane security between the first PC5 link and the second PC5 link can be ensured, and collaborative processing of control plane security protection on two sides of a relay can be implemented, so that a control plane integrity protection method is activated on both links on two sides of the relay or the control plane integrity protection method is activated on neither of links on two sides of the relay, and/or, a control plane confidentiality protection method is activated on both links on two sides of the relay or a control plane confidentiality protection method is activated on neither of links on two sides of the relay, to keep security protection processing manners on the links on two sides of the relay consistent, thereby avoiding a problem that control plane security protection of the first PC5 link fails because a priority of control plane security protection used by the second PC5 link is high, or avoiding a problem that control plane security protection of the second PC5 link fails because a priority of control plane security protection used by the first PC5 link is high.

The following step 412 to step 419 are a process of determining a user plane security protection method for a PC5 link between terminal devices.

Step 412: The first terminal device sends a DSMP message of the first PC5 link to the first relay.

For example, the first terminal device returns a direct security communication mode command (direct security mode command, DSMC) message to the first relay. The DSMP message is a response to a direct security mode command message, and the message may carry the PC5 user plane security policy of the first terminal device.

Step 413: The first relay sends a DSMP message of the second PC5 link to the second terminal device.

Optionally, the DSMP message of the second PC5 link may further carry a PC5 user plane security policy of the first relay, or the first relay further sends the PC5 user plane security policy of the first relay to the second terminal device. In other words, the DSMP message of the second PC5 link carries the PC5 user plane security policy of the first terminal device and the PC5 user plane security policy of the first relay.

The DSMP message of the second PC5 link may alternatively be a new DSMP message sent by the first relay, and the new DSMP message carries the PC5 user plane security policy of the first relay.

It should be noted that, a possible implementation method is as follows. The first relay replaces the PC5 user plane security policy of the first terminal device in the DSMP message of the first PC5 link with the PC5 user plane security policy of the first relay.

Step 414: The second terminal device determines a PC5 user plane security protection method of the second PC5 link according to the PC5 user plane security policy of the first relay and the PC5 user plane security policy of the second terminal device, and determines a PC5 user plane security algorithm of the second PC5 link.

Specifically, the second terminal device may determine, in at least one of the following manners, whether to activate the PC5 user plane security protection method of the second PC5 link:

Manner A: The second terminal device determines, according to the PC5 user plane security policy of the first relay and the PC5 user plane security policy of the second terminal device, whether to activate the PC5 user plane security protection method of the second PC5 link. For a specific carrying method, refer to descriptions in clause 5.3.3.1.4.2 in the standard TS 33.536.

Manner B: The second terminal device determines, according to the PC5 user plane security policy of the first relay and the PC5 user plane security policy of the second terminal device and with reference to the PC5 user plane security policy of the first terminal device, whether to activate the PC5 user plane security protection method of the second PC5 link. In this way, the PC5 user plane security protection method between the first relay and the second terminal device is the same as the PC5 user plane security protection method between the first relay and the first terminal device. Specifically, if any two user plane confidentiality protection policies and/or user plane integrity protection policies conflict (one is NOT NEEDED, and the other is REQUIRED), the connection needs to be rejected. For example, assuming that a user plane confidentiality policy of the first terminal device is NOT NEEDED but a user plane confidentiality protection policy of the second terminal device is REQUIRED, the second terminal device releases the connection. When no conflict exists between any two user plane confidentiality protection policies and/or user plane integrity protection policies, if REQUIRED exists, security corresponding to REQUIRED is enabled. For example, if the user plane confidentiality policy of the first terminal device is REQUIRED or the user plane confidentiality protection policy of the second terminal device is REQUIRED, the second terminal device enables user plane confidentiality protection If the user plane confidentiality protection policy of the first terminal device, the user plane confidentiality protection policy of the second terminal device, and the user plane security policy of the first relay are all PREFERRED, the second terminal device may determine that user plane confidentiality protection is enabled, or may determine that user plane confidentiality protection is disabled. When any two user plane confidentiality protection policies and/or user plane integrity protection policies do not conflict, if NOT NEEDED exists, corresponding security is disabled. For example, if the user plane confidentiality policy of the first terminal device is NOT NEEDED, or the user plane confidentiality protection policy of the second terminal device is NOT NEEDED, the second terminal device disables user plane confidentiality protection. Further, after the control plane security of the second PC5 link is activated, optionally, for a user plane security enabling method, refer to the activated control plane security protection method of the second PC5 link. Specifically, if the control plane confidentiality protection is enabled, the user plane confidentiality protection may be enabled or may be disabled. If control plane confidentiality protection is disabled, user plane confidentiality protection is disabled. If control plane integrity protection is enabled, user plane integrity protection may be enabled or may be disabled. If control plane integrity protection is disabled, user plane integrity protection is disabled.

After determining the PC5 user plane security protection method of the second PC5 link, the second terminal device may determine the PC5 user plane security algorithm. In a possible implementation, the selected PC5 control plane security algorithm is reused as the PC5 user plane security algorithm. In another implementation, the PC5 user plane security algorithm is reselected. The security algorithm includes a confidentiality protection algorithm and/or an integrity protection algorithm. Optionally, if there is a security algorithm policy, the second terminal device selects a 128-bit algorithm or a 256-bit algorithm according to the security algorithm policy.

Step 415: The second terminal device sends the first information to the first relay.

The first information indicates the user plane security protection method of the second PC5 link. For example, the first information is a user plane security activation indication of the second PC5 link.

Specifically, the second terminal device sends a direct communication accept (direct communication accept) message to the first relay. The message carries the user plane security activation indication of the second PC5 link. For a definition of the user plane security activation indication, refer to descriptions in clause 5.3.3.1.4.2 in the standard TS 33.536.

For example, if the user plane security protection method of the second PC5 link determined by the second terminal device is that user plane confidentiality protection of the second PC5 link is disabled and user plane integrity protection of the second PC5 link is enabled, the user plane security activation indication indicates to activate the user plane integrity protection of the second PC5 link but not to activate the user plane confidentiality protection of the second PC5 link.

Step 416: The first relay activates user plane security protection of the second PC5 link based on the first information.

In the foregoing example, after receiving the user plane security activation indication, the first relay activates, based on the user plane security activation indication, the first relay to activate the user plane integrity protection of the second PC5 link, and does not activate the first relay to activate user plane confidentiality protection of the second PC5 link.

Step 417: The first relay sends second information to the first terminal device.

For example, the second information indicates a user plane security protection method of the first PC5 link.

In a possible case, the second information is the first information, that is, the first relay forwards the first information to the first terminal device.

In another possible case, the first relay determines a PC5 user plane security protection method of the first PC5 link according to the user plane security protection method of the second PC5 link, and generates second information, where the second information is the same as the first information.

In the foregoing example, the first relay determines that the PC5 user plane security protection method of the first PC5 link is also that user plane integrity protection is enabled and user plane confidentiality protection is disabled.

Step 418: The first terminal device activates user plane security of the first PC5 link based on the second information.

In the foregoing example, if a user plane security activation indication of the first PC5 link indicates that user plane integrity protection of the first PC5 link is enabled, the first terminal device activates the user plane integrity protection of the first PC5 link, and user plane confidentiality protection of the first PC5 link is disabled.

It should be noted that the procedure for determining control plane security protection shown in step 401 to step 411 and the procedure for determining user plane security protection shown in step 412 to step 419 may be decoupled, that is, may be separately performed.

When the foregoing two procedures are separately performed, when activating the PC5 control plane security protection method of the first PC5 link, the first relay may not use the PC5 control plane security protection method of the first PC5 link determined by the second terminal device. In this case, before determining the user plane security protection method of the first PC5 link, the first relay needs to first determine whether the user plane security protection method of the second PC5 link determined by the second terminal device can be supported. If the user plane security protection method of the second PC5 link cannot be supported, a consistency requirement of the user plane security protection method is not satisfied. In this case, the first relay needs to release the connection, and a direct communication link fails to be established.

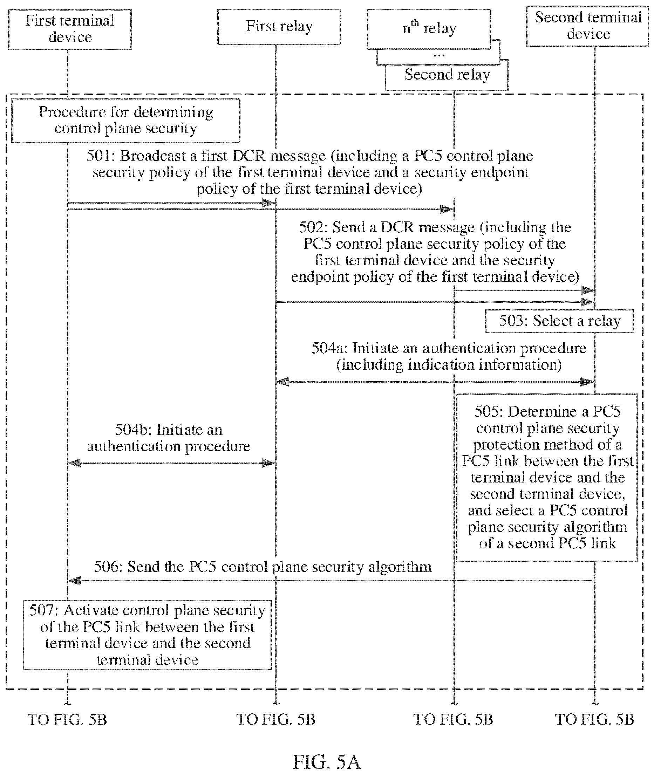

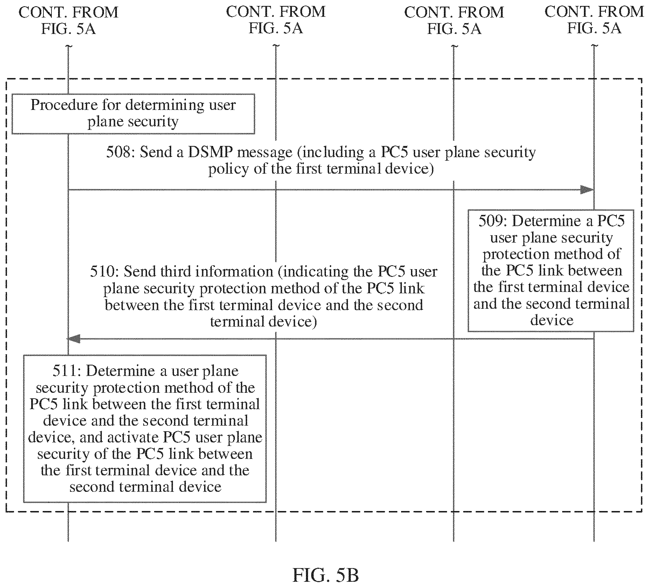

FIG. 5A and FIG. 5B are a schematic flowchart of a secure communication method according to an embodiment of this application. The method is still performed by the first communication apparatus. The method may include the following steps.

Step 501: A first terminal device broadcasts a first direct communication request (direct communication request, DCR) message.

For specific content, refer to step 401.

Step 502: After receiving the first DCR message, at least one relay sends a second DCR message to a second terminal device.

For specific content, refer to step 402.

Step 503: The second terminal device determines, from the at least one relay, a first relay used to establish a second PC5 link.

For specific content, refer to step 403.

In embodiments of this application, the first DCR message includes that a security endpoint policy of the first terminal device is "end-to-end" security. In the following description of this embodiment, the second terminal device determines that a security endpoint is located in the first terminal device.

Step 504a: After determining the first relay, the second terminal device initiates an authentication procedure with the first relay.

In this step, a message sent by the second terminal device includes indication information, and the indication information indicates that authentication and key distribution are performed between the second terminal device and the first terminal device. For specific content, refer to step 404.

Step 504b: The first relay initiates an authentication procedure with the first terminal device.

In this embodiment, after the first terminal device and the first relay determine that a security endpoint policy used by the second terminal device is end-to-end security, in subsequent steps, after receiving the message from the second terminal device, the first relay does not parse the message, but directly sends the message to the first terminal device. An advantage of this is that a communication delay can be reduced.

For a method for identifying end-to-end by the first relay, refer to related descriptions in step 404.

Step 505: The second terminal device determines a PC5 control plane security protection method for a PC5 link between the first terminal device and the second terminal device, and selects a PC5 control plane security algorithm of the PC5 link between the first terminal device and the second terminal device.

Specifically, the second terminal device determines the PC5 control plane security protection method of the PC5 link between the first terminal device and the second terminal device according to a control plane security policy of the first terminal device and a control plane security policy of the second terminal device. For example, if PC5 control plane integrity protection of the first terminal device is REQUIRED, PC5 control plane confidentiality protection of the first terminal device is REQUIRED, PC5 control plane integrity protection of the second terminal device is REQUIRED, and PC5 control plane confidentiality protection of the second terminal device is NOT NEEDED, the second terminal device determines that PC5 control plane security integrity protection of the PC5 link between the first terminal device and the second terminal device is enabled and PC5 control plane security confidentiality protection of the PC5 link between the first terminal device and the second terminal device is disabled.

In a possible embodiment, the second terminal device may further determine the PC5 control plane security algorithm of the PC5 link between the first terminal device and the first terminal device according to a user plane security policy of the first terminal device, a user plane security policy of the second terminal device, a control plane security algorithm of the first terminal device, and a control plane security algorithm of the second terminal device.

Step 506: The second terminal device sends the selected PC5 control plane security algorithm to the first terminal device.

The PC5 control plane security algorithm is used by the first terminal device and the second terminal device to protect the PC5 link between the first terminal device and the second terminal device.

For example, the second terminal device sends direct security communication mode signaling (direct security mode command, DSMC) message to the first terminal device, where the message carries a control plane security algorithm of the second PC5 link determined by the second terminal device.

Step 507: The first terminal device activates PC5 control plane security of the PC5 link between the first terminal device and the second terminal device according to a received control plane security algorithm of the PC5 link.

In embodiments of this application, step 501 to step 508 are a process of determining a control plane security protection method for a PC5 link between terminal devices. The control plane security protection method of the PC5 link between the first terminal device and the second terminal device may be determined according to the foregoing method, so that processing manners of control plane security protection of all devices can be consistent.

The following step 508 to step 511 are a process of determining a user plane security protection method for a PC5 link between terminal devices.

Step 508: The first terminal device sends a first DSMP message to the second terminal device.

For example, the first terminal device sends a first direct security mode complete (direct security mode complete, DSMP) message to the second terminal device. The first DSMP message is a response to a direct security mode command message, and the message may carry the PC5 user plane security policy of the first terminal device.

For specific content, refer to step 412.

Step 509: The second terminal device determines a PC5 user plane security protection method of the PC5 link between the first terminal device and the second terminal device according to the PC5 user plane security policy of the first terminal device and a PC5 user plane security policy of the second terminal device.

Specifically, the second terminal device determines the PC5 user plane security protection method of the PC5 link between the first terminal device and the first terminal device according to the user plane security policy of the first terminal device and the user plane security policy of the second terminal device. For example, if PC5 user plane integrity protection of the first terminal device is REQUIRED, PC5 user plane confidentiality protection of the first terminal device is REQUIRED, PC5 user plane integrity protection of the second terminal device is REQUIRED, and PC5 user plane confidentiality protection of the second terminal device is NOT NEEDED, the second terminal device determines that PC5 user plane security integrity protection of the PC5 link between the first terminal device and the second terminal device is enabled and PC5 user plane security confidentiality protection of the PC5 link between the first terminal device and the second terminal device is disabled.

After determining the PC5 user plane security protection method of the second PC5 link, the second terminal device may select the PC5 user plane security algorithm. The security algorithm includes a confidentiality protection algorithm and/or an integrity protection algorithm. Optionally, if there is a security algorithm policy, the second terminal device selects a 128-bit algorithm or a 256-bit algorithm according to the security algorithm policy.

Step 510: The second terminal device sends third information to the first terminal device.

For example, the third information includes user plane security activation indication information of the PC5 link between the first terminal device and the second terminal device. The user plane security activation indication information indicates the user plane security protection method of the PC5 link between the first terminal device and the second terminal device.

For example, the second terminal device sends a direct communication accept (direct communication accept) message to the first terminal device. The message carries the user plane security activation indication.

Step 511: The first terminal device determines the user plane security protection method of the PC5 link between the first terminal device and the second terminal device, and activates user plane security of the PC5 link between the first terminal device and the second terminal device.

In embodiments of this application, step 509 to step 512 are a process of determining a user plane security protection method of a PC5 link between terminal devices. The user plane security protection method of the PC5 link between the first terminal device and the second terminal device may be determined according to the foregoing method, so that processing manners of user plane security protection of all devices can be consistent.

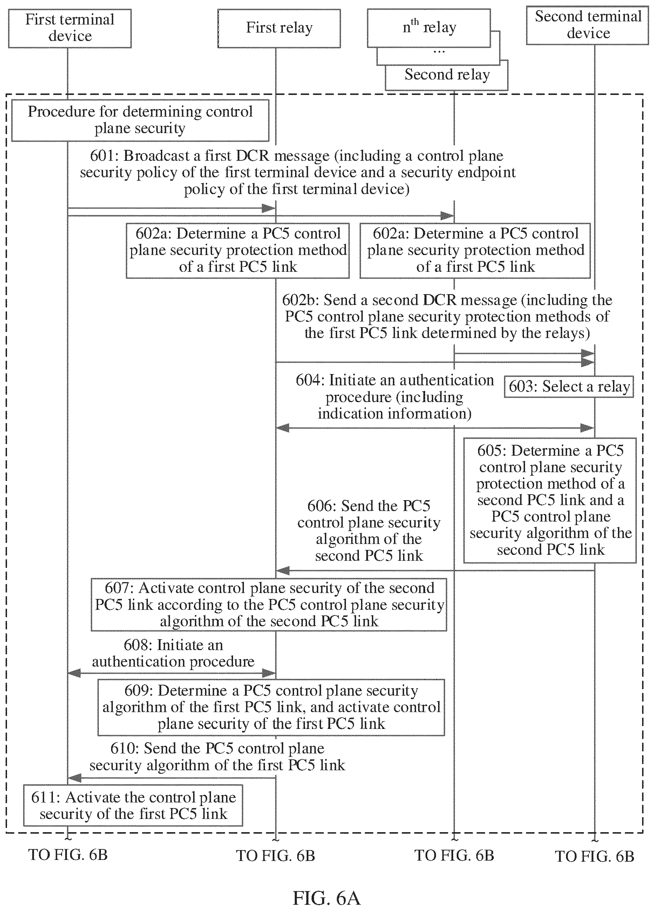

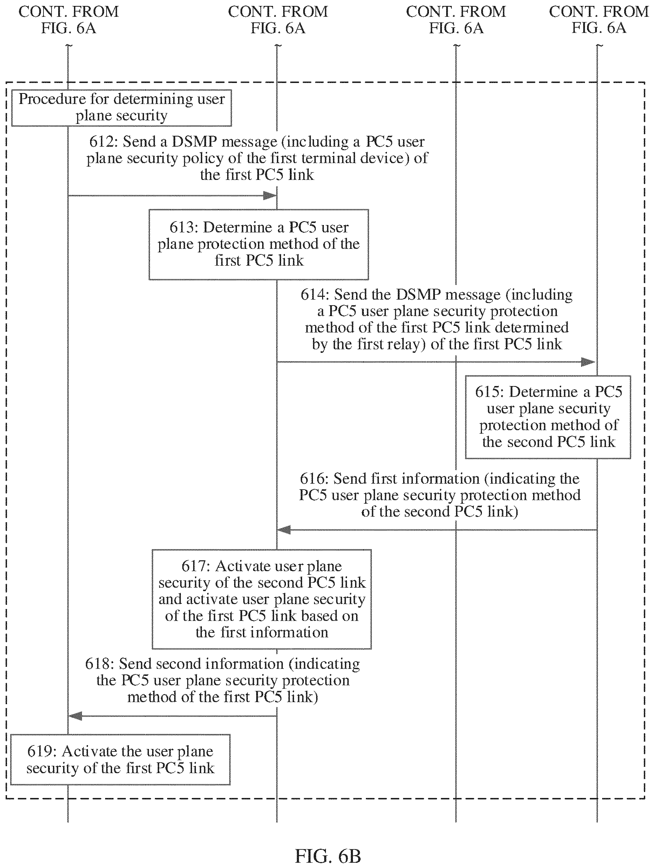

FIG. 6A and FIG. 6B are a schematic flowchart of a secure communication method according to an embodiment of this application. The method may include the following steps.

Step 601: A first terminal device broadcasts a direct communication request (direct communication request, DCR).

For specific content, refer to step 401.

It should be noted that, in this embodiment, hop-by-hop security is used. Therefore, a security endpoint is located on a relay. In this embodiment, the following description is provided according to a case in which the security endpoint is located on the relay.

Step 602a: Each relay that receives the DCR message determines a PC5 control plane security protection method for a first PC5 link according to a PC5 control plane security policy of the first terminal device and a PC5 control plane security policy of the relay.

Specifically, if PC5 control plane integrity protection of the first terminal device and/or PC5 control plane integrity protection of the relay are/is REQUIRED, it is determined that PC5 control plane integrity protection is enabled. If PC5 control plane integrity protection of the first terminal device and/or PC5 control plane integrity protection of the relay are/is NOT NEEDED, it is determined that PC5 control integrity protection is disabled. If PC5 control plane confidentiality protection of the first terminal device and/or PC5 control plane confidentiality protection of the relay are/is REQUIRED, it is determined that PC5 control plane confidentiality protection is enabled. If PC5 control plane confidentiality protection of the first terminal device and/or PC5 control plane confidentiality protection of the relay are/is NOT NEEDED, it is determined that PC5 control plane confidentiality protection is disabled. If both PC5 control plane integrity protection of the first terminal device and PC5 control plane integrity protection of the relay are PREFERRED, it may be determined that PC5 control plane integrity protection is enabled, or it may be determined that control plane integrity protection is disabled. If both PC5 control plane confidentiality protection of the first terminal device and PC5 control plane confidentiality protection of the relay are PREFERRED, it may be determined that PC5 control plane confidentiality protection is enabled, or it may be determined that control plane confidentiality protection is disabled.

For a specific method, refer to descriptions in clause 5.3.3.1.4.3 of the standard TS 33.536.

Specifically, each relay may determine the PC5 control plane security protection method of the first PC5 link according to step 406.

Step 602b: Each relay that receives a first DCR message sends a second DCR message to a second terminal device, where the second DCR message includes the PC5 control plane security protection method of the first PC5 link determined by the relay.

In a possible embodiment, a format of a security policy may be assigned to the PC5 control plane security protection method that is of the first PC5 link and that is determined by each relay, and then each relay may replace the PC5 control plane security policy of the first terminal device in the DCR message with the PC5 control plane security protection method that is of the first PC5 link and that is determined by each relay. Specifically, if it is determined that control plane integrity protection is enabled, a PC5 control plane security policy whose control plane integrity protection is REQUIRED is transferred. If it is determined that is control plane integrity protection is disabled, a PC5 control plane security policy whose control plane integrity protection is NOT NEEDED is transferred. If it is determined that control plane confidentiality protection is enabled, a PC5 control plane security policy whose control plane confidentiality protection is REQUIRED is transferred. If it is determined that control plane confidentiality protection is disabled, a PC5 control plane security policy whose control plane confidentiality protection is NOT NEEDED is transferred. For example, the first DCR message of the first terminal device carries PC5 control plane confidentiality protection in a "PREFERRED" state and PC5 control plane integrity protection in a "PREFERRED" state. A first relay determines, according to a PC5 control plane security policy of the first relay and the PC5 control plane security policy of the first terminal device, that a second PC5 link has control plane integrity protection in a "REQUIRED" state and control plane confidentiality protection in a "REQUIRED" state. In this case, the first relay may replace a PC5 control plane security policy of the first terminal device in the second DCR message with control plane confidentiality protection in a "REQUIRED" state and control plane integrity protection in a "REQUIRED" state.

In another possible embodiment, the DCR message sent by each relay further includes an indication information, and the indication information indicates that the security endpoint is located on the relay.

In a possible embodiment, an indication information format or a character string format may be assigned to the PC5 control plane security protection method that is of the first PC5 link and that is determined by each relay. For example, "00" indicates that control plane confidentiality protection is disabled and control plane integrity protection is disabled, and "01" indicates that control plane confidentiality protection is disabled and control plane integrity protection is enabled; or "enabled, enabled" indication information is used. For example, if "enabled, disabled" is transferred, it indicates that control plane integrity protection is enabled, and control plane confidentiality protection is disabled. The second terminal device may determine, based on the received DCR message, a PC5 control plane security policy that is selected by the relay or that can be used by the second terminal device.

In an optional manner, when the second DCR message carries the PC5 control plane security protection method of the first PC5 link determined by the relay, the second DCR message may also carry at least one PC5 security algorithm policy according to step 402.

Step 603: The second terminal device selects, from the at least one relay, a relay to serve the first terminal.

It should be noted that, in this embodiment, step 403 is an optional step. In a possible case, when only one relay forwards a DCR message to the second terminal device, step 403 may not be performed. In this case, the second terminal device only needs to determine whether the relay supports the service, and if the relay supports the service, determines that the relay is a relay that serves the first terminal device. For example, the second terminal device performs determining based on whether the second terminal device is interested in application information carried in the message.

In another possible case, when more than two relays send the second DCR messages to the second terminal device, the second terminal device determines, according to the received PC5 control plane security protection method of the first PC5 link, a control plane security protection method of the first PC5 link that is determined by a relay and that is supported by the second terminal device. The second terminal device selects one relay from the relays as a target relay, for example, selects the first relay as the target relay.

Step 604 to step 611 are the same as step 404 to step 411, and details are not described herein again.

It should be noted that in step 605, the second terminal device determines a PC5 control plane security protection method of the second PC5 link according to the PC5 control plane security protection method of the first PC5 link determined by the relay and a PC5 control plane security protection policy of the second terminal device that are carried in step 602b. Specifically, if information is transferred in a form of a security policy, the second terminal device determines the PC5 control plane security protection method of the second PC5 link according to a security policy carried in the second DCR message. If the PC5 control plane security policy is transferred in a manner of indication information, the second terminal device determines a PC5 control plane security policy of the second PC5 link based on the indication information.

After determining a security policy of the second PC5 link, the second terminal device activates PC5 control plane security of the second PC5 link before the sending step 606.

In embodiments of this application, step 601 to step 611 are a process of determining a control plane security protection method for a PC5 link between terminal devices. According to the foregoing method, consistency of control plane security between the first PC5 link and the second PC5 link can be ensured, and collaborative processing of control plane security protection on two sides of a relay can be implemented, so that a control plane integrity protection method is activated on both links on two sides of the relay or the control plane integrity protection method is activated on neither of links on two sides of the relay, and/or, a control plane confidentiality protection method is activated on both links on two sides of the relay or a control plane confidentiality protection method is activated on neither of links on two sides of the relay, to keep security protection processing manners on the links on two sides of the relay consistent, thereby avoiding a problem that control plane security protection of the first PC5 link fails because a priority of control plane security protection used by the second PC5 link is high, or avoiding a problem that control plane security protection of the second PC5 link fails because a priority of control plane security protection used by the first PC5 link is high.

The following step 612 to step 618 are a process of determining user plane security for a PC5 link between terminal devices.

Step 612: The first terminal device sends a DSMP message of the first PC5 link to the first relay.

For example, the first terminal device returns a direct security mode complete (direct security mode complete, DSMP) message to the first relay. The DSMP message is a response to a direct security mode command message, and the message may carry the PC5 user plane security policy of the first terminal device.

Step 613: The first relay determines a PC5 user plane security protection method of the first PC5 link according to the PC5 user plane security policy of the first terminal device and a PC5 user plane security policy of the first relay.

Step 614: The first relay sends a DSMP message of the second PC5 link, where the message includes the PC5 user plane security protection method that is of the first PC5 link and that is determined by the first relay. Specifically, for a transfer method of the user plane security protection method, refer to related descriptions of step 602b.

Step 615: The second terminal device determines a PC5 user plane security protection method of the second PC5 link.

The second terminal device determines the PC5 user plane security protection method of the second PC5 link according to the PC5 user plane security protection method of the first PC5 link determined by the relay and a PC5 user plane security policy of the second terminal device. Specifically, if the information is transferred in a form of a security policy, the second terminal device determines the PC5 user plane security protection method of the second PC5 link according to the security policy carried in the second DCR message. If the information is transferred in a manner of indication information, the second terminal device determines the PC5 user plane security protection method of the second PC5 link based on the indication information.

Step 617 to step 619 are the same as step 417 to step 419, and details are not described herein again.

It can be learned that, in embodiments of this application, the relay determines control plane security and user plane security of a PC5 link between the first terminal device and the second terminal device. According to the foregoing method, consistency of control plane/user plane security of the PC5 link between the first terminal device and the second terminal device can be ensured, and collaborative processing of control plane/user plane security protection on two sides of a relay can be implemented, so that a control plane/user plane integrity protection method is activated on both links on two sides of the relay or the control plane/user plane integrity protection method is activated on neither of links on two sides of the relay, and/or, a control plane/user plane confidentiality protection method is activated on both links on two sides of the relay or a control plane/user plane confidentiality protection method is activated on neither of links on two sides of the relay, to keep security protection processing manners on the links on two sides of the relay consistent.

The foregoing embodiments may be separately implemented in different scenarios, or may be implemented in combination in a same scenario, or different solutions in different embodiments may be implemented in combination. This is not specifically limited.

Step numbers in the flowcharts described in embodiments of this application are merely an example of an execution procedure, and do not constitute a limitation on an execution sequence of the steps. In embodiments of this application, there is no strict execution sequence between steps that do not have a time sequence dependency relationship with each other.

In the foregoing embodiments provided in this application, the secure communication method provided in embodiments of this application is described from a perspective of a terminal as an execution body. To implement functions in the secure communication method provided in embodiments of this application, the terminal may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

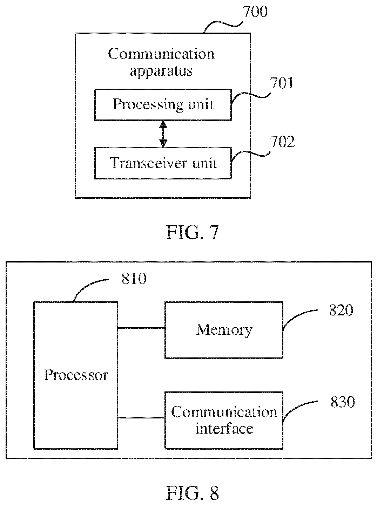

Same as a concept of the foregoing embodiments, embodiments of this application further provide a communication apparatus 700. The communication apparatus 700 is configured to implement functions of the first terminal device, the second terminal device, and the relay in the foregoing methods. For example, the communication apparatus 700 may be the first terminal device, or may be an apparatus in the first terminal device. The apparatus may be a chip system. In this embodiment of this application, the chip system may include a chip, or may include a chip and another discrete component. In an example, as shown in FIG. 7, the communication apparatus 700 includes a processing unit 701 and a transceiver unit 702.

For the inventive concept shown in FIG. 4A and FIG. 4B, the communication apparatus 700 is configured to implement functions of the second terminal device in the foregoing methods.

The transceiver unit 702 is configured to receive a first request message about a first terminal device from a relay, where the first request message includes a PC5 user plane security policy of the first terminal device and a PC5 user plane security policy of the relay.

The processing unit 701 is configured to determine first information according to a PC5 user plane security policy of a second terminal device, the PC5 user plane security policy of the first terminal device, and the PC5 user plane security policy of the relay.

The transceiver unit 702 is further configured to send the first information to the relay, where the first information indicates a user plane security protection method of a first PC5 link and a user plane security protection method of a second PC5 link, and the user plane security protection method of the first PC5 link is the same as the user plane security protection method of the second PC5 link.

The first PC5 link is a PC5 link between the relay and the first terminal device, and the second PC5 link is a PC5 link between the relay and the second terminal device.

In an embodiment, that the first information indicates a user plane security protection method of the first PC5 link and a user plane security protection method of the second PC5 link includes:
the first information indicates that both user plane integrity protection of the first PC5 link and user plane integrity protection of the second PC5 link are enabled or disabled, and/or both user plane confidentiality protection of the first PC5 link and user plane confidentiality protection of the second PC5 link are enabled or disabled.

In an embodiment, the transceiver unit 702 is further configured to receive a second request message about the first terminal device from the relay, where the second request message includes a PC5 control plane security policy of the first terminal device and a PC5 control plane security policy of the relay.

The processing unit 701 is further configured to determine a control plane security algorithm of the second PC5 link according to a PC5 control plane security policy of the second terminal device, the PC5 control plane security policy of the first terminal device, and the PC5 control plane security policy of the relay.

The transceiver unit 702 is further configured to send the control plane security algorithm of the second PC5 link to the relay, where the control plane security algorithm indicates control plane security of the second PC5 link and control plane security of the first PC5 link, where the control plane security protection method of the first PC5 link is the same as the control plane security protection method activated on the second PC5 link.

In some embodiments, the second request message further includes an indication of a security endpoint policy, and the indication of the security endpoint policy indicates that a security endpoint is located on the relay.

In some embodiments, that the control plane security algorithm indicates a control plane security protection method of the second PC5 link and a control plane security protection method of the first PC5 link includes:
the control plane security algorithm indicates that both control plane integrity protection of the first PC5 link and control plane integrity protection of the second PC5 link are enabled or disabled, and/or both control plane confidentiality protection of the first PC5 link and control plane confidentiality protection of the second PC5 link are enabled or disabled.

In some embodiments, when determining the first information according to a PC5 user plane security policy of a second terminal device, the PC5 user plane security policy of the first terminal device, and the PC5 user plane security policy of the relay, the processing unit 701 is specifically configured to:
determine the first information according to the PC5 user plane security policy of the second terminal device, the PC5 user plane security policy of the first terminal device, the PC5 user plane security policy of the relay, and the control plane security algorithm of the second PC5 link.

A security level of the user plane security protection method of the second PC5 link is not higher than a security level of the control plane security protection method of the second PC5 link, and a security level of the user plane security protection method of the first PC5 link is not higher than a security level of the control plane security protection method of the first PC5 link.

In some embodiments, that the user plane security protection method of the second PC5 link is not higher than the control plane security protection method of the second PC5 link, and a security level of the user plane security protection method of the first PC5 link is not higher than the control plane security protection method of the first PC5 link includes:
when control plane confidentiality protection of a third PC5 link is enabled, user plane confidentiality protection of the third PC5 link is enabled or disabled;
when the control plane confidentiality protection of the third PC5 link is disabled, the user plane confidentiality protection of the third PC5 link is disabled;
when control plane integrity protection of the third PC5 link is enabled, user plane integrity protection of the third PC5 link is enabled or disabled; and
when the control plane integrity protection of the third PC5 link is disabled, the user plane integrity protection of the third PC5 link is disabled, where
the third PC5 link is the second PC5 link or the first PC5 link.

For specific execution processes and advantageous effects of the processing unit 701 and the transceiver unit 702, refer to the records in the method embodiment shown in FIG. 4A and FIG. 4B.

For the inventive concept shown in FIG. 6A and FIG. 6B, the communication apparatus 700 is configured to implement functions of the second terminal device in the foregoing methods.

The transceiver unit 702 is configured to send a request including an indication of a security endpoint policy, where the indication of the security endpoint policy indicates that a security endpoint is located on the relay.

The transceiver unit 702 is configured to receive a PC5 control plane security protection method for a first PC5 link and a PC5 control plane security protection method for a second PC5 link that are determined by the at least one relay.

The processing unit 701 is configured to determine a target relay according to a PC5 control plane security policy of the second terminal device, the PC5 control plane security protection method of the first PC5 link and the PC5 control plane security protection method of the second PC5 link determined by the at least one relay.

The transceiver unit 702 is further configured to receive a PC5 user plane security protection method of the first PC5 link and a PC5 user plane security protection method of the second PC5 link that are determined by the target relay.

The processing unit 701 is further configured to determine first information according to the PC5 user plane security protection method of the first PC5 link from the target relay and a PC user plane security protection method of the second terminal device.

The transceiver unit 702 is further configured to send the first information to the relay by using the second terminal device, where the first information indicates a user plane security protection method of a first PC5 link and a user plane security protection method of a second PC5 link, where the user plane security protection method of the first PC5 link is the same as the user plane security protection method of the second PC5 link.

The first PC5 link is a PC5 link between the relay and the first terminal device, and the second PC5 link is a PC5 link between the relay and the second terminal device.

In some embodiments, that the first information indicates a user plane security protection method of the first PC5 link and a user plane security protection method of the second PC5 link includes:
the first information indicates that both user plane integrity protection of the first PC5 link and user plane integrity protection of the second PC5 link are enabled or disabled, and/or both user plane confidentiality protection of the first PC5 link and user plane confidentiality protection of the second PC5 link are enabled or disabled.

In some embodiments, the processing unit is further configured to determine a control plane security algorithm of the second PC5 link according to the PC5 user plane security protection method of the first PC5 link and the PC5 user plane security protection method of the second PC5 link that are determined by the target relay.

The transceiver unit 702 is further configured to send the control plane security algorithm of the second PC5 link to the relay, where the control plane security algorithm of the second PC5 link indicates control plane security of the second PC5 link and control plane security of the first PC5 link.

In some embodiments, that the control plane security algorithm of the second PC5 link indicates control plane security of the second PC5 link and control plane security of the first PC5 link includes:
the control plane security algorithm of the second PC5 link indicates that both control plane integrity protection of the first PC5 link and control plane integrity protection of the second PC5 link are enabled or disabled, and/or both control plane confidentiality protection of the first PC5 link and control plane confidentiality protection of the second PC5 link are enabled or disabled.

In some embodiments, when determining the first information according to the PC5 user plane security protection method of the first PC5 link from the target relay and the PC user plane security policy of the second terminal device, the processing unit 701 is specifically configured to:
determine the first information according to the PC5 user plane security protection method of the first PC5 link and the control plane security algorithm of the second PC5 link of the target relay, where
a security level of the user plane security protection method of the second PC5 link is not higher than a security level of the control plane security protection method of the second PC5 link, and a security level of the user plane security protection method of the first PC5 link is not higher than a security level of the control plane security protection method of the first PC5 link.

In some embodiments, that the user plane security protection method of the second PC5 link is not higher than the control plane security of the second PC5 link, and a security level of the user plane security protection method of the first PC5 link is not higher than the control plane security protection method of the first PC5 link includes:
when control plane confidentiality protection of a third PC5 link is enabled, user plane confidentiality protection of the third PC5 link is enabled or disabled;
when the control plane confidentiality protection of the third PC5 link is disabled, the user plane confidentiality protection of the third PC5 link is disabled;
when control plane integrity protection of the third PC5 link is enabled, user plane integrity protection of the third PC5 link is enabled or disabled; and
when the control plane integrity protection of the third PC5 link is disabled, the user plane integrity protection of the third PC5 link is disabled, where
the third PC5 link is the second PC5 link or the first PC5 link.

For specific execution processes and advantageous effects of the processing unit 701 and the transceiver unit 702, refer to the records in the method embodiment shown in FIG. 6A and FIG. 6B.

For the inventive concept shown in FIG. 4A and FIG. 4B to FIG. 6A and FIG. 6B, the communication apparatus 700 is configured to implement functions of the second terminal device in the foregoing methods.

The transceiver unit 702 is configured to receive a direct communication request from a first terminal device via at least one relay.

The processing unit 701 is configured to determine a target relay from the at least one relay based on security policy assistance information.

The processing unit 701 is configured to communicate with the first terminal device via the target relay.

In some embodiments, the security policy assistance information includes a PC control plane security policy of the at least one relay.

When determining the target relay from the at least one relay based on the security policy assistance information, the processing unit 701 is specifically configured to:
select, from the at least one relay, a target relay including an optional PC5 control plane security policy.

In some embodiments, the security policy assistance information includes a PC control plane security policy of the at least one relay and the PC5 control plane security policy of the second terminal device; and
that the second terminal device determines a target relay from the at least one relay based on security policy assistance information includes:
the processing unit 701 is specifically configured to select, from the at least one relay, a target relay whose PC control plane security policy does not conflict with the PC5 control plane security policy of the second terminal device.

In some embodiments, the security policy assistance information includes a PC control plane security policy of the at least one relay and the PC5 control plane security policy of the second terminal device; and

The processing unit 701 is specifically configured to select from the at least one relay according to the security policy assistance information by using the second terminal device, a target relay whose security level of a PC user plane security protection method is not higher than a security level of a PC control plane security protection method of the second terminal device.

In some embodiments, the security policy assistance information is preconfigured by a policy control function network element.

For specific execution processes and advantageous effects of the processing unit 701 and the transceiver unit 702, refer to the records in the method embodiment shown in FIG. 6A and FIG. 6B.

For the inventive concept shown in FIG. 4A and FIG. 4B, the communication apparatus 700 is configured to implement functions of the relay in the foregoing methods.

The transceiver unit 702 is configured to send a first request message about a first terminal device to a second terminal device, where the first request message includes a PC5 user plane security policy of the first terminal device and a PC5 user plane security policy of the relay.

The transceiver unit 702 is configured to receive first information from the second terminal device, where the first information indicates a user plane security protection method of a first PC5 link and a user plane security protection method of a second PC5 link, and the user plane security protection method of the first PC5 link is the same as the user plane security protection method of the second PC5 link.

The processing unit 701 is configured to activate the user plane security protection method of the second PC5 link and the user plane security protection method of the first PC5 link based on the first information.

The first PC5 link is a PC5 link between the relay and the first terminal device, and the second PC5 link is a PC5 link between the relay and the second terminal device.

In some embodiments, the transceiver unit 702 is further configured to send a control plane security policy of the first terminal device and a control plane security policy of the relay to the second terminal device, where the control plane security policy of the first terminal device and the control plane security policy of the relay are for determining a control plane security algorithm of the second PC5 link.

The transceiver unit 702 is further configured to receive the control plane security algorithm of the second PC5 link from the second terminal device, where the control plane security algorithm indicates a control plane security protection method of the second PC5 link and a control plane security protection method of the first PC5 link.

The processing unit 701 is further configured to activate a control plane security protection method of the second PC5 link and a control plane security protection method of the first PC5 link according to the control plane security algorithm of the second PC5 link, where the control plane security protection method of the first PC5 link is the same as the control plane security protection method activated on the second PC5 link.

In some embodiments, a security level of a PC5 control plane security protection method of the relay is not higher than a security level of a PC5 user plane security protection method of the second PC5 link.

In some embodiments, a security level of the user plane security protection method of the first PC5 link is not higher than a security level of the control plane security protection method of the first PC5 link, and a security level of the user plane security protection method of the second PC5 link is not higher than a security level of the control plane security protection method of the second PC5 link.

For the inventive concept shown in FIG. 6A and FIG. 6B, the communication apparatus 700 is configured to implement functions of the relay in the foregoing methods.

The transceiver unit 702 is configured to send a direct communication request from a first terminal device to a second terminal device, where the direct communication request includes an indication of a security endpoint policy, and the indication of the security endpoint policy indicates that a security endpoint is located on the relay.

The processing unit 701 is configured to determine a PC5 user plane security protection method of a first PC5 link according to a PC5 user plane security policy of the relay and a PC user plane security policy of the first terminal device.

The transceiver unit 702 is further configured to send the PC5 user plane security protection method of the first PC5 link to the second terminal device.

The transceiver unit 702 is further configured to receive first information from the second terminal device, where the first information indicates a user plane security protection method of the first PC5 link and a user plane security protection method of the second PC5 link.

The processing unit 701 is further configured to activate the user plane security protection method of the second PC5 link and the user plane security protection method of the first PC5 link based on the first information, where the user plane security protection method of the second PC5 link is the same as the user plane security protection method of the first PC5 link.

The first PC5 link is a PC5 link between the relay and the first terminal device, and the second PC5 link is a PC5 link between the relay and the second terminal device.

In some embodiments, that the first information indicates a user plane security protection method of the first PC5 link and a user plane security protection method of the second PC5 link includes:
the first information indicates that both user plane integrity protection of the first PC5 link and user plane integrity protection of the second PC5 link are enabled or disabled, and/or both user plane confidentiality protection of the first PC5 link and user plane confidentiality protection of the second PC5 link are enabled or disabled.

In some embodiments, the transceiver unit 702 is further configured to receive a second request message from the first terminal device, where the second request message includes a PC5 control plane security policy of the first terminal device and a PC5 control plane security policy of the relay.

The processing unit 701 is further configured to determine a PC5 control plane security protection method of the first PC5 link and a PC5 control plane security protection method of the second PC5 link according to the PC5 control plane security policy of the relay and the PC5 control plane security policy of the first terminal device.

The transceiver unit 702 is further configured to send the PC5 control plane security protection method of the first PC5 link and the PC5 control plane security protection method of the second PC5 link to the second terminal device.

The transceiver unit 702 is further configured to receive a control plane security algorithm of the second PC5 link from the second terminal device, where the control plane security algorithm indicates control plane security of the second PC5 link and control plane security of the first PC5 link, and the control plane security algorithm is determined according to the PC5 control plane security protection method of the first PC5 link and the PC5 control plane security protection method of the second PC5 link.

The processing unit 701 is further configured to activate the control plane security protection method of the second PC5 link and the control plane security protection method of the first PC5 link according to the control plane security algorithm of the second PC5 link.

In some embodiments, that the control plane security algorithm indicates control plane security of the second PC5 link and a control plane security protection method of the first PC5 link includes:
the control plane security algorithm indicates that both control plane integrity protection of the first PC5 link and control plane integrity protection of the second PC5 link are enabled or disabled, and/or both control plane confidentiality protection of the first PC5 link and control plane confidentiality protection of the second PC5 link are enabled or disabled.

In some embodiments, a security level of the user plane security protection method of the second PC5 link is not higher than a security level of the control plane security protection method of the second PC5 link, and a security level of the user plane security protection method of the first PC5 link is not higher than a security level of the control plane security protection method of the first PC5 link.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

In still another example, as shown in FIG. 8, the communication apparatus 700 includes at least one processor may 810 and a memory 820. The memory 820 stores a computer program. The memory 820 is coupled to the processor 810. Couplings in this embodiment of this application are indirect couplings or communication connections between apparatuses, units, or modules, may be implemented in an electrical form, a mechanical form, or another form, and are used for information exchange between the apparatuses, the units, or the modules. In another implementation, the memory 820 may alternatively be located outside the communication apparatus 700. The processor 810 may collaborate with the memory 820. The processor 810 may invoke the computer program stored in the memory 820. At least one of the at least one memory may be included in the processor.

In some embodiments, the communication apparatus 700 may further include a communication interface 830, configured to communicate with another device through a transmission medium, so that the apparatus in the communication apparatus 700 can communicate with the another device. For example, the communication interface 830 may be a transceiver, a circuit, a bus, a module, or another type of communication interface. The another device may be another terminal. The processor 810 sends and receives information through the communication interface 830, and is configured to implement the method in the foregoing embodiments. For example, the communication interface 830 is configured to receive resource indication information. In still another example, the communication interface 830 is configured to send data.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a nonvolatile memory, for example, a hard disk drive (hard disk drive, HDD) or a solid-state drive (solid-state drive, SSD), or may be a volatile memory (volatile memory) such as a random access memory (random-access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the computer program, and/or the data.

All or some of the methods in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program is loaded and executed on a computer, the procedures or functions according to the embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any medium accessible by a computer, or a data storage device, such as a server or a data center, integrating one or more media. The medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clearly that, a person skilled in the art can make various modifications and variations to this application without departing from the scope of this application. This application is intended to cover these modifications and variations of this application provided that they fall within the scope of protection defined by the following claims.

## Claims

1. A secure communication method, comprising:
receiving (413), by a second terminal device (UE-2), a first request message about a first terminal device (UE-1) from a relay, wherein the first request message comprises a PC5 user plane security policy of the first terminal device and a PC5 user plane security policy of the relay;
determining (414), by the second terminal device, first information according to a PC5 user plane security policy of the second terminal device, the PC5 user plane security policy of the first terminal device, and the PC5 user plane security policy of the relay; and
sending (415), by the second terminal device, the first information to the relay, wherein the first information indicates a user plane security protection method of a first PC5 link and a user plane security protection method of a second PC5 link, and the user plane security protection method of the first PC5 link is the same as the user plane security protection method of the second PC5 link, wherein
the first PC5 link is a PC5 link between the relay and the first terminal device, and the second PC5 link is a PC5 link between the relay and the second terminal device.

2. The method according to claim 1, wherein that the first information indicates a user plane security protection method of a first PC5 link and a user plane security protection method of a second PC5 link comprises:
the first information indicates that both user plane integrity protection of the first PC5 link and user plane integrity protection of the second PC5 link are enabled or disabled, and/or both user plane confidentiality protection of the first PC5 link and user plane confidentiality protection of the second PC5 link are enabled or disabled.

3. The method according to claim 1 or 2, wherein the method further comprises:
receiving (402), by a second terminal device, a second request message about the first terminal device from the relay, wherein the second request message comprises a PC5 control plane security policy of the first terminal device and a PC5 control plane security policy of the relay;
determining (405), by a second terminal device, a control plane security algorithm of the second PC5 link according to a PC5 control plane security policy of the second terminal device, the PC5 control plane security policy of the first terminal device, and the PC5 control plane security policy of the relay; and
sending (406), by the second terminal device, the control plane security algorithm of the second PC5 link to the relay, wherein the control plane security algorithm indicates a control plane security protection method of the second PC5 link and a control plane security protection method of the first PC5 link, and the control plane security protection method of the first PC5 link is the same as the control plane security protection method activated on the second PC5 link.

4. The method according to claim 3, wherein the second request message further comprises an indication of a security endpoint policy, and the indication of the security endpoint policy indicates that a security endpoint is located on the relay.

5. The method according to claim 3, wherein that the control plane security algorithm indicates a control plane security protection method of the second PC5 link and a control plane security protection method of the first PC5 link comprises:
the control plane security algorithm indicates that both control plane integrity protection of the first PC5 link and control plane integrity protection of the second PC5 link are enabled or disabled, and/or both control plane confidentiality protection of the first PC5 link and control plane confidentiality protection of the second PC5 link are enabled or disabled.

6. The method according to any one of claims 3 to 5, comprising:
the determining first information according to a PC5 user plane security policy of a second terminal device, the PC5 user plane security policy of the first terminal device, and the PC5 user plane security policy of the relay comprises:
determining the first information according to the PC5 user plane security policy of the second terminal device, the PC5 user plane security policy of the first terminal device, the PC5 user plane security policy of the relay, and the control plane security algorithm of the second PC5 link, wherein
a security level of the user plane security protection method of the second PC5 link is not higher than a security level of the control plane security protection method of the second PC5 link, and a security level of the user plane security protection method of the first PC5 link is not higher than a security level of the control plane security protection method of the first PC5 link.

7. The method according to claim 6, wherein that a security level of the user plane security protection method of the second PC5 link is not higher than a security level of the control plane security protection method of the second PC5 link, and a security level of the user plane security protection method of the first PC5 link is not higher than a security level of the control plane security protection method of the first PC5 link comprises:
when control plane confidentiality protection of a third PC5 link is enabled, user plane confidentiality protection of the third PC5 link is enabled or disabled;
when the control plane confidentiality protection of the third PC5 link is disabled, the user plane confidentiality protection of the third PC5 link is disabled;
when control plane integrity protection of the third PC5 link is enabled, user plane integrity protection of the third PC5 link is enabled or disabled; and
when the control plane integrity protection of the third PC5 link is disabled, the user plane integrity protection of the third PC5 link is disabled, wherein
the third PC5 link is the second PC5 link or the first PC5 link.

8. A communication apparatus (700), wherein the communication apparatus is a second terminal device (UE-2), comprising:
a transceiver unit (702), configured to receive (413) a first request message about a first terminal device (UE-1) from a relay, wherein the first request message comprises a PC5 user plane security policy of the first terminal device and a PC5 user plane security policy of the relay;
a processing unit (701), configured to determine (414) first information according to a PC5 user plane security policy of the second terminal device, the PC5 user plane security policy of the first terminal device, and the PC5 user plane security policy of the relay, wherein
the transceiver unit is further configured to send (415) the first information to the relay, wherein the first information indicates a user plane security protection method of a first PC5 link and a user plane security protection method of a second PC5 link, and the user plane security protection method of the first PC5 link is the same as the user plane security protection method of the second PC5 link, wherein
the first PC5 link is a PC5 link between the relay and the first terminal device, and the second PC5 link is a PC5 link between the relay and the second terminal device.

9. The apparatus according to claim 8, wherein that the first information indicates a user plane security protection method of a first PC5 link and a user plane security protection method of a second PC5 link comprises:
the first information indicates that both user plane integrity protection of the first PC5 link and user plane integrity protection of the second PC5 link are enabled or disabled, and/or both user plane confidentiality protection of the first PC5 link and user plane confidentiality protection of the second PC5 link are enabled or disabled.

10. The apparatus according to claim 8 or 9, wherein
the transceiver unit is further configured to receive (402) a second request message about the first terminal device from the relay, wherein the second request message comprises a PC5 control plane security policy of the first terminal device and a PC5 control plane security policy of the relay;
the processing unit is further configured to determine (405) a control plane security algorithm of the second PC5 link according to a PC5 control plane security policy of the second terminal device, the PC5 control plane security policy of the first terminal device, and the PC5 control plane security policy of the relay; and
the transceiver unit is further configured to send (406) the control plane security algorithm of the second PC5 link to the relay, wherein the control plane security algorithm indicates a control plane security protection method of the second PC5 link and a control plane security protection method of the first PC5 link, and the control plane security protection method of the first PC5 link is the same as the control plane security protection method activated on the second PC5 link.

11. The apparatus according to claim 10, wherein the second request message further comprises an indication of a security endpoint policy, and the indication of the security endpoint policy indicates that a security endpoint is located on the relay.

12. The apparatus according to claim 10, wherein that the control plane security algorithm indicates a control plane security protection method of the second PC5 link and a control plane security protection method of the first PC5 link comprises:
the control plane security algorithm indicates that both control plane integrity protection of the first PC5 link and control plane integrity protection of the second PC5 link are enabled or disabled, and/or both control plane confidentiality protection of the first PC5 link and control plane confidentiality protection of the second PC5 link are enabled or disabled.

13. The apparatus according to any one of claims 10 to 12, wherein
when determining the first information according to the PC5 user plane security policy of the second terminal device, the PC5 user plane security policy of the first terminal device, and the PC5 user plane security policy of the relay, the processing unit is specifically configured to:
determine the first information according to the PC5 user plane security policy of the second terminal device, the PC5 user plane security policy of the first terminal device, the PC5 user plane security policy of the relay, and the control plane security algorithm of the second PC5 link, wherein
a security level of the user plane security protection method of the second PC5 link is not higher than a security level of the control plane security protection method of the second PC5 link, and a security level of the user plane security protection method of the first PC5 link is not higher than a security level of the control plane security protection method of the first PC5 link.

14. The apparatus according to claim 13, wherein that the user plane security protection method of the second PC5 link is not higher than the control plane security protection method of the second PC5 link, and a security level of the user plane security protection method of the first PC5 link is not higher than the control plane security protection method of the first PC5 link comprises:
when control plane confidentiality protection of a third PC5 link is enabled, user plane confidentiality protection of the third PC5 link is enabled or disabled;
when the control plane confidentiality protection of the third PC5 link is disabled, the user plane confidentiality protection of the third PC5 link is disabled;
when control plane integrity protection of the third PC5 link is enabled, user plane integrity protection of the third PC5 link is enabled or disabled; and
when the control plane integrity protection of the third PC5 link is disabled, the user plane integrity protection of the third PC5 link is disabled, wherein
the third PC5 link is the second PC5 link or the first PC5 link.

15. A computer-readable storage medium, wherein the storage medium stores a computer program or instructions, and when the computer program or the instructions are executed by a communication apparatus, the method according to any one of claims 1 to 7 is implemented.

## Patentansprüche

1. Sicheres Kommunikationsverfahren, umfassend:
Empfangen (413) einer ersten Anforderungsnachricht über eine erste Endgerätevorrichtung (UE-1) von einem Relais durch eine zweite Endgerätevorrichtung (UE-2), wobei die erste Anforderungsnachricht eine PC5-Benutzerebenen-Sicherheitsrichtlinie der ersten Endgerätevorrichtung und eine PC5-Benutzerebenen-Sicherheitsrichtlinie des Relais umfasst;
Bestimmen (414) erster Informationen durch die zweite Endgerätevorrichtung gemäß einer PC5-Benutzerebenen-Sicherheitsrichtlinie der zweiten Endgerätevorrichtung, der PC5-Benutzerebenen-Sicherheitsrichtlinie der ersten Endgerätevorrichtung und der PC5-Benutzerebenen-Sicherheitsrichtlinie des Relais; und
Senden (415) der ersten Informationen durch die zweite Endgerätevorrichtung an das Relais, wobei die ersten Informationen ein Benutzerebenen-Sicherheitsschutzverfahren einer ersten PC5-Verbindung und ein Benutzerebenen-Sicherheitsschutzverfahren einer zweiten PC5-Verbindung angeben und das Benutzerebenen-Sicherheitsschutzverfahren der ersten PC5-Verbindung dieselbe ist wie das Benutzerebenen-Sicherheitsschutzverfahren der zweiten PC5-Verbindung, wobei
die erste PC5-Verbindung eine PC5-Verbindung zwischen dem Relais und der ersten Endgerätevorrichtung ist, und die zweite PC5-Verbindung eine PC5-Verbindung zwischen dem Relais und der zweiten Endgerätevorrichtung ist.

2. Verfahren nach Anspruch 1, wobei die ersten Informationen ein Benutzerebenen-Sicherheitsschutzverfahren einer ersten PC5-Verbindung und ein Benutzerebenen-Sicherheitsschutzverfahren einer zweiten PC5-Verbindung angeben, umfassend:
die erste Information gibt an, dass sowohl der Benutzerebenen-Integritätsschutz der ersten PC5-Verbindung als auch der Benutzerebenen-Integritätsschutz der zweiten PC5-Verbindung aktiviert oder deaktiviert sind und/oder sowohl der Benutzerebenen-Vertraulichkeitsschutz der ersten PC5-Verbindung als auch der Benutzerebenen-Vertraulichkeitsschutz der zweiten PC5-Verbindung aktiviert oder deaktiviert sind.

3. Verfahren gemäß Anspruch 1 oder 2, wobei das Verfahren ferner Folgendes umfasst:
Empfangen (402) einer zweiten Anforderungsnachricht über die erste Endgerätevorrichtung von dem Relais durch eine zweite Endgerätevorrichtung, wobei die zweite Anforderungsnachricht eine PC5-Steuerebenen-Sicherheitsrichtlinie der ersten Endgerätevorrichtung und eine PC5-Steuerebenen-Sicherheitsrichtlinie des Relais umfasst;
Bestimmen (405) eines Steuerebenen-Sicherheitsalgorithmus der zweiten PC5-Verbindung durch eine zweite Endgerätevorrichtung gemäß einer PC5-Steuerebenen-Sicherheitsrichtlinie der zweiten Endgerätevorrichtung, der PC5-Steuerebenen-Sicherheitsrichtlinie der ersten Endgerätevorrichtung und der PC5-Steuerebenen-Sicherheitsrichtlinie des Relais; und
Senden (406) des Steuerebenen-Sicherheitsalgorithmus der zweiten PC5-Verbindung an das Relais durch die zweite Endgerätevorrichtung, wobei der Steuerebenen-Sicherheitsalgorithmus ein Steuerebenen-Sicherheitsschutzverfahren der zweiten PC5-Verbindung und ein Steuerebenen-Sicherheitsschutzverfahren der ersten PC5-Verbindung angibt und das Steuerebenen-Sicherheitsschutzverfahren der ersten PC5-Verbindung dieselbe ist wie das auf der zweiten PC5-Verbindung aktivierte Steuerebenen-Sicherheitsschutzverfahren.

4. Verfahren nach Anspruch 3, wobei die zweite Anforderungsnachricht ferner eine Angabe einer Sicherheitsendpunktrichtlinie umfasst und die Angabe der Sicherheitsendpunktrichtlinie angibt, dass sich ein Sicherheitsendpunkt auf dem Relais befindet.

5. Verfahren nach Anspruch 3, wobei der Steuerebenen-Sicherheitsalgorithmus ein Steuerebene-Sicherheitsschutzverfahren für die zweite PC5-Verbindung angibt und ein Steuerebenen-Sicherheitsschutzverfahren für die erste PC5-Verbindung Folgendes umfasst:
der Steuerebenen-Sicherheitsalgorithmus gibt an, dass sowohl der Integritätsschutz der Steuerebene der ersten PC5-Verbindung als auch der Integritätsschutz der Steuerebene der zweiten PC5-Verbindung aktiviert oder deaktiviert sind und/oder sowohl der Steuerebene-Vertraulichkeitsschutz der ersten PC5-Verbindung als auch der Steuerebenen-Vertraulichkeitsschutz der zweiten PC5-Verbindung aktiviert oder deaktiviert sind.

6. Verfahren nach einem der Ansprüche 3 bis 5, umfassend:
Bestimmen erster Informationen gemäß einer PC5-Benutzerebenen-Sicherheitsrichtlinie einer zweiten Endgerätevorrichtung, der PC5-Benutzerebenen-Sicherheitsrichtlinie der ersten Endgerätevorrichtung und der PC5-Benutzerebenen-Sicherheitsrichtlinie des Relais Folgendes umfassen:
Bestimmen der ersten Informationen gemäß der PC5-Benutzerebenen-Sicherheitsrichtlinie der zweiten Endgerätevorrichtung, der PC5-Benutzerebenen-Sicherheitsrichtlinie der ersten Endgerätevorrichtung, der PC5-Benutzerebenen-Sicherheitsrichtlinie des Relais und dem Steuerebenen-Sicherheitsalgorithmus der zweiten PC5-Verbindung, wobei
eine Sicherheitsstufe des Benutzerebenen-Sicherheitsschutzverfahrens der zweiten PC5-Verbindung nicht höher als ein Steuerebenen-Sicherheitsschutzverfahren der zweiten PC5-Verbindung ist, und eine Sicherheitsstufe des Benutzerebenen-Sicherheitsschutzverfahrens der ersten PC5-Verbindung nicht höher als eine Sicherheitsstufe des Steuerebenen-Sicherheitsschutzverfahrens der ersten PC5-Verbindung ist.

7. Verfahren nach Anspruch 6, wobei eine Sicherheitsstufe des Benutzerebenen-Sicherheitsschutzverfahrens der zweiten PC5-Verbindung nicht höher als ein Steuerebenen-Sicherheitsschutzverfahren der zweiten PC5-Verbindung ist, und eine Sicherheitsstufe des Benutzerebenen-Sicherheitsschutzverfahren der ersten PC5-Verbindung nicht höher als eine Sicherheitsstufe des Steuerebenen-Sicherheitsschutzverfahren der ersten PC5-Verbindung ist, Folgendes umfassend:
wenn der Steuerebenen-Vertraulichkeitsschutz einer dritten PC5-Verbindung aktiviert ist, ist der Benutzerebenen-Vertraulichkeitsschutz der dritten PC5-Verbindung aktiviert oder deaktiviert;
wenn der Steuerebenen-Vertraulichkeitsschutz der dritten PC5-Verbindung deaktiviert ist, ist der Benutzerebenen-Vertraulichkeitsschutz der dritten PC5-Verbindung deaktiviert;
wenn der Steuerebenen-Integritätsschutz der dritten PC5-Verbindung aktiviert ist, ist der Benutzerebenen-Integritätsschutz der dritten PC5-Verbindung aktiviert oder deaktiviert; und
wenn der Kontrollebenen-Integritätsschutz der dritten PC5-Verbindung deaktiviert ist, wird der Benutzerebenen-Integritätsschutz der dritten PC5-Verbindung deaktiviert, wobei
die dritte PC5-Verbindung die zweite PC5-Verbindung oder die erste PC5-Verbindung ist.

8. Kommunikationsapparat (700), wobei der Kommunikationsapparat eine zweite Endgerätevorrichtung (UE-2) ist, umfassend:
eine Transceivereinheit (702), die dazu konfiguriert ist, eine erste Anforderungsnachricht über eine erste Endgerätevorrichtung (UE-1) von einem Relais zu empfangen (413), wobei die erste Anforderungsnachricht eine PC5-Benutzerebenen-Sicherheitsrichtlinie der ersten Endgerätevorrichtung und eine PC5-Benutzerebenen-Sicherheitsrichtlinie des Relais umfasst;
eine Verarbeitungseinheit (701), die dazu konfiguriert ist, erste Informationen gemäß einer PC5-Benutzerebenen-Sicherheitsrichtlinie der zweiten Endgerätevorrichtung, der PC5-Benutzerebenen-Sicherheitsrichtlinie der ersten Endgerätevorrichtung und der PC5-Benutzerebenen-Sicherheitsrichtlinie des Relais zu bestimmen (414), wobei
die Transceivereinheit ist ferner dazu konfiguriert, die ersten Informationen an das Relais zu senden (415), wobei die ersten Informationen eine Benutzerebenen-Sicherheitsschutzverfahren einer ersten PC5-Verbindung und ein Benutzerebenen-Sicherheitsschutzverfahren einer zweiten PC5-Verbindung angeben und das Benutzerebenen-Sicherheitsschutzverfahren der ersten PC5-Verbindung dieselbe ist wie das Benutzerebenen-Sicherheitsschutzverfahren der zweiten PC5-Verbindung, wobei
die erste PC5-Verbindung eine PC5-Verbindung zwischen dem Relais und der ersten Endgerätevorrichtung ist, und die zweite PC5-Verbindung eine PC5-Verbindung zwischen dem Relais und der zweiten Endgerätevorrichtung ist.

9. Vorrichtung nach Anspruch 8, wobei die ersten Informationen eines Benutzerebenen-Sicherheitsschutzverfahrens einer ersten PC5-Verbindung und ein Benutzerebenen-Sicherheitsschutzverfahren einer zweiten PC5-Verbindung angeben, umfassend:
die erste Information gibt an, dass sowohl der Benutzerebenen-Integritätsschutz der ersten PC5-Verbindung als auch der Benutzerebenen-Integritätsschutz der zweiten PC5-Verbindung aktiviert oder deaktiviert sind und/oder sowohl der Benutzerebenen-Vertraulichkeitsschutz der ersten PC5-Verbindung als auch der Benutzerebenen-Vertraulichkeitsschutz der zweiten PC5-Verbindung aktiviert oder deaktiviert sind.

10. Vorrichtung nach Anspruch 8 oder 9, wobei
die Transceivereinheit ferner dazu konfiguriert ist, eine zweite Anforderungsnachricht über die erste Endgerätevorrichtung vom Relais zu empfangen (402), wobei die zweite Anforderungsnachricht eine PC5-Steuerebenen-Sicherheitsrichtlinie der ersten Endgerätevorrichtung und eine PC5-Steuerebenen-Sicherheitsrichtlinie des Relais umfasst;
die Verarbeitungseinheit ferner dazu konfiguriert ist, einen Steuerebenen-Sicherheitsalgorithmus der zweiten PC5-Verbindung gemäß einer PC5-Steuerebenen-Sicherheitsrichtlinie der zweiten Endgerätevorrichtung, der PC5-Steuerebenen-Sicherheitsrichtlinie der ersten Endgerätevorrichtung und der PC5-Steuerebenen-Sicherheitsrichtlinie des Relais zu bestimmen (405); und
die Transceivereinheit ferner dazu konfiguriert ist, den Steuerebenen-Sicherheitsalgorithmus der zweiten PC5-Verbindung an das Relais zu senden (406), wobei der Steuerebenen-Sicherheitsalgorithmus ein Steuerebenen-Sicherheitsschutzverfahren der zweiten PC5-Verbindung und ein Steuerebenen-Sicherheitsschutzverfahren der ersten PC5-Verbindung angibt und das Steuerebenen-Sicherheitsschutzverfahren der ersten PC5-Verbindung dieselbe ist wie das auf der zweiten PC5-Verbindung aktivierte Steuerebenen-Sicherheitsschutzverfahren.

11. Vorrichtung nach Anspruch 10, wobei die zweite Anforderungsnachricht ferner eine Angabe einer Sicherheitsendpunktrichtlinie umfasst und die Angabe der Sicherheitsendpunktrichtlinie angibt, dass sich ein Sicherheitsendpunkt auf dem Relais befindet.

12. Vorrichtung nach Anspruch 10, wobei der Steuerebenen-Sicherheitsalgorithmus ein Steuerebenen-Sicherheitsschutzverfahren für die zweite PC5-Verbindung angibt und ein Steuerebenen-Sicherheitsschutzverfahren für die erste PC5-Verbindung Folgendes umfasst:
der Steuerebenen-Sicherheitsalgorithmus gibt an, dass sowohl der Integritätsschutz der Steuerebene der ersten PC5-Verbindung als auch der Integritätsschutz der Steuerebene der zweiten PC5-Verbindung aktiviert oder deaktiviert sind und/oder sowohl der Steuerebene-Vertraulichkeitsschutz der ersten PC5-Verbindung als auch der Steuerebenen-Vertraulichkeitsschutz der zweiten PC5-Verbindung aktiviert oder deaktiviert sind.

13. Vorrichtung nach einem der Ansprüche 10 bis 12, wobei beim Bestimmen der ersten Informationen gemäß der PC5-Benutzerebenen-Sicherheitsrichtlinie der zweiten Endgerätevorrichtung, der PC5-Benutzerebenen-Sicherheitsrichtlinie der ersten Endgerätevorrichtung und der PC5-Benutzerebenen-Sicherheitsrichtlinie des Relais die Verarbeitungseinheit speziell für Folgendes konfiguriert ist:
Bestimmen der ersten Informationen gemäß der PC5-Benutzerebenen-Sicherheitsrichtlinie der zweiten Endgerätevorrichtung, der PC5-Benutzerebenen-Sicherheitsrichtlinie der ersten Endgerätevorrichtung, der PC5-Benutzerebenen-Sicherheitsrichtlinie des Relais und dem Steuerebenen-Sicherheitsalgorithmus der zweiten PC5-Verbindung, wobei
eine Sicherheitsstufe des Benutzerebenen-Sicherheitsschutzverfahrens der zweiten PC5-Verbindung nicht höher als ein Steuerebenen-Sicherheitsschutzverfahren der zweiten PC5-Verbindung ist, und eine Sicherheitsstufe des Benutzerebenen-Sicherheitsschutzverfahrens der ersten PC5-Verbindung nicht höher als eine Sicherheitsstufe des Steuerebenen-Sicherheitsschutzverfahrens der ersten PC5-Verbindung ist.

14. Vorrichtung nach Anspruch 13, wobei das Benutzerebenen-Sicherheitsschutzverfahren der zweiten PC5-Verbindung nicht höher ist als das Steuerebenen-Sicherheitsschutzverfahren der zweiten PC5-Verbindung und eine Sicherheitsstufe des Benutzerebenen-Sicherheitsschutzverfahrens der ersten PC5-Verbindung nicht höher ist als das Steuerebenen-Sicherheitsschutzverfahren auf der ersten PC5-Verbindung, Folgendes umfassend:
wenn der Steuerebenen-Vertraulichkeitsschutz einer dritten PC5-Verbindung aktiviert ist, ist der Benutzerebenen-Vertraulichkeitsschutz der dritten PC5-Verbindung aktiviert oder deaktiviert;
wenn der Steuerebenen-Vertraulichkeitsschutz der dritten PC5-Verbindung deaktiviert ist, ist der Benutzerebenen-Vertraulichkeitsschutz der dritten PC5-Verbindung deaktiviert;
wenn der Steuerebenen-Integritätsschutz der dritten PC5-Verbindung aktiviert ist, ist der Benutzerebenen-Integritätsschutz der dritten PC5-Verbindung aktiviert oder deaktiviert; und
wenn der Kontrollebenen-Integritätsschutz der dritten PC5-Verbindung deaktiviert ist, wird der Benutzerebenen-Integritätsschutz der dritten PC5-Verbindung deaktiviert, wobei
die dritte PC5-Verbindung die zweite PC5-Verbindung oder die erste PC5-Verbindung ist.

15. Computerlesbares Speichermedium, wobei das Speichermedium ein Computerprogramm oder Anweisungen speichert, und wenn das Computerprogramm oder die Anweisungen von einer Kommunikationsvorrichtung ausgeführt werden, wird das Verfahren gemäß einem der Ansprüche 1 bis 7 implementiert.

## Revendications

1. Procédé de communication sécurisée, comprenant :
la réception (413), par un second dispositif terminal (UE-2), d'un premier message de demande concernant un premier dispositif terminal (UE-1) à partir d'un relais, dans lequel le premier message de demande comprend une politique de sécurité de plan utilisateur PC5 du premier dispositif terminal et une politique de sécurité de plan utilisateur PC5 du relais ;
la détermination (414), par le second dispositif terminal, de premières informations selon une politique de sécurité de plan utilisateur PC5 du second dispositif terminal, la politique de sécurité de plan utilisateur PC5 du premier dispositif terminal et la politique de sécurité de plan utilisateur PC5 du relais ; et
l'envoi (415), par le second dispositif terminal, des premières informations au relais, dans lequel les premières informations indiquent un procédé de protection de sécurité de plan utilisateur d'une première liaison PC5 et un procédé de protection de sécurité de plan utilisateur d'une deuxième liaison PC5, et le procédé de protection de sécurité de plan utilisateur de la première liaison PC5 est le même que le procédé de protection de sécurité de plan utilisateur de la deuxième liaison PC5, dans lequel
la première liaison PC5 est une liaison PC5 entre le relais et le premier dispositif terminal, et la deuxième liaison PC5 est une liaison PC5 entre le relais et le second dispositif terminal.

2. Procédé selon la revendication 1, dans lequel, en ce que les premières informations indiquent un procédé de protection de sécurité de plan utilisateur d'une première liaison PC5 et un procédé de protection de sécurité de plan utilisateur d'une deuxième liaison PC5 comprend :
les premières informations indiquent qu'à la fois une protection d'intégrité de plan utilisateur de la première liaison PC5 et une protection d'intégrité de plan utilisateur de la deuxième liaison PC5 sont activées ou désactivées, et/ou à la fois une protection de confidentialité de plan utilisateur de la première liaison PC5 et une protection de confidentialité de plan utilisateur de la deuxième liaison PC5 sont activées ou désactivées.

3. Procédé selon la revendication 1 ou 2, dans lequel le procédé comprend également :
la réception (402), par un second dispositif terminal, d'un second message de demande concernant le premier dispositif terminal à partir du relais, dans lequel le second message de demande comprend une politique de sécurité de plan de commande PC5 du premier dispositif terminal et une politique de sécurité de plan de commande PC5 du relais ;
la détermination (405), par un second dispositif terminal, d'un algorithme de sécurité de plan de commande de la deuxième liaison PC5 selon une politique de sécurité de plan de commande PC5 du second dispositif terminal, la politique de sécurité de plan de commande PC5 du premier dispositif terminal, et la politique de sécurité de plan de commande PC5 du relais ; et
l'envoi (406), par le second dispositif terminal, de l'algorithme de sécurité de plan de commande de la deuxième liaison PC5 au relais, dans lequel l'algorithme de sécurité de plan de commande indique un procédé de protection de sécurité de plan de commande de la deuxième liaison PC5 et un procédé de protection de sécurité de plan de commande de la première liaison PC5, et le procédé de protection de sécurité de plan de commande de la première liaison PC5 est le même que le procédé de protection de sécurité de plan de commande activé sur la deuxième liaison PC5.

4. Procédé selon la revendication 3, dans lequel le second message de demande comprend également une indication d'une politique de point d'extrémité de sécurité, et l'indication de la politique de point d'extrémité de sécurité indique qu'un point d'extrémité de sécurité est situé sur le relais.

5. Procédé selon la revendication 3, dans lequel, en ce que l'algorithme de sécurité de plan de commande indique un procédé de protection de sécurité de plan de commande de la deuxième liaison PC5 et un procédé de protection de sécurité de plan de commande de la première liaison PC5 comprend :
l'algorithme de sécurité de plan de commande indique qu'à la fois une protection d'intégrité de plan de commande de la première liaison PC5 et une protection d'intégrité de plan de commande de la deuxième liaison PC5 sont activées ou désactivées, et/ou à la fois une protection de confidentialité de plan de commande de la première liaison PC5 et une protection de confidentialité de plan de commande de la deuxième liaison PC5 sont activées ou désactivées.

6. Procédé selon l'une quelconque des revendications 3 à 5, comprenant :
la détermination de premières informations selon une politique de sécurité de plan utilisateur PC5 d'un second dispositif terminal, la politique de sécurité de plan utilisateur PC5 du premier dispositif terminal et la politique de sécurité de plan utilisateur PC5 du relais comprend :
la détermination des premières informations selon la politique de sécurité de plan utilisateur PC5 du second dispositif terminal, la politique de sécurité de plan utilisateur PC5 du premier dispositif terminal, la politique de sécurité de plan utilisateur PC5 du relais et l'algorithme de sécurité de plan de commande de la deuxième liaison PC5, dans lequel
un niveau de sécurité du procédé de protection de sécurité de plan utilisateur de la deuxième liaison PC5 n'est pas supérieur à un niveau de sécurité du procédé de protection de sécurité de plan de commande de la deuxième liaison PC5, et un niveau de sécurité du procédé de protection de sécurité de plan utilisateur de la première liaison PC5 n'est pas supérieur à un niveau de sécurité du procédé de protection de sécurité de plan de commande de la première liaison PC5.

7. Procédé selon la revendication 6, dans lequel, en ce qu'un niveau de sécurité du procédé de protection de sécurité de plan utilisateur de la deuxième liaison PC5 n'est pas supérieur à un niveau de sécurité du procédé de protection de sécurité de plan de commande de la deuxième liaison PC5, et un niveau de sécurité du procédé de protection de sécurité de plan utilisateur de la première liaison PC5 n'est pas supérieur à un niveau de sécurité du procédé de protection de sécurité de plan de commande de la première liaison PC5 comprend :
lorsqu'une protection de confidentialité de plan de commande d'une troisième liaison PC5 est activée, une protection de confidentialité de plan utilisateur de la troisième liaison PC5 est activée ou désactivée ;
lorsque la protection de confidentialité de plan de commande de la troisième liaison PC5 est désactivée, la protection de confidentialité de plan utilisateur de la troisième liaison PC5 est désactivée ;
lorsqu'une protection d'intégrité de plan de commande de la troisième liaison PC5 est activée, une protection d'intégrité de plan utilisateur de la troisième liaison PC5 est activée ou désactivée ; et
lorsque la protection d'intégrité de plan de commande de la troisième liaison PC5 est désactivée, la protection d'intégrité de plan utilisateur de la troisième liaison PC5 est désactivée, dans lequel
la troisième liaison PC5 est la deuxième liaison PC5 ou la première liaison PC5.

8. Appareil de communication (700), dans lequel l'appareil de communication est un second dispositif terminal (UE-2), comprenant :
une unité d'émission-réception (702), configurée pour recevoir (413) un premier message de demande concernant un premier dispositif terminal (UE-1) à partir d'un relais, dans lequel le premier message de demande comprend une politique de sécurité de plan utilisateur PC5 du premier dispositif terminal et une politique de sécurité de plan utilisateur PC5 du relais ;
une unité de traitement (701), configurée pour déterminer (414) des premières informations selon une politique de sécurité de plan utilisateur PC5 du second dispositif terminal, la politique de sécurité de plan utilisateur PC5 du premier dispositif terminal et la politique de sécurité de plan utilisateur PC5 du relais, dans lequel
l'unité d'émission-réception est également configurée pour envoyer (415) les premières informations au relais, dans lequel les premières informations indiquent un procédé de protection de sécurité de plan utilisateur d'une première liaison PC5 et un procédé de protection de sécurité de plan utilisateur d'une deuxième liaison PC5, et le procédé de protection de sécurité de plan utilisateur de la première liaison PC5 est le même que le procédé de protection de sécurité de plan utilisateur de la deuxième liaison PC5, dans lequel
la première liaison PC5 est une liaison PC5 entre le relais et le premier dispositif terminal, et la deuxième liaison PC5 est une liaison PC5 entre le relais et le second dispositif terminal.

9. Appareil selon la revendication 8, dans lequel, en ce que les premières informations indiquent un procédé de protection de sécurité de plan utilisateur d'une première liaison PC5 et un procédé de protection de sécurité de plan utilisateur d'une deuxième liaison PC5 comprend :
les premières informations indiquent qu'à la fois une protection d'intégrité de plan utilisateur de la première liaison PC5 et une protection d'intégrité de plan utilisateur de la deuxième liaison PC5 sont activées ou désactivées, et/ou à la fois une protection de confidentialité de plan utilisateur de la première liaison PC5 et une protection de confidentialité de plan utilisateur de la deuxième liaison PC5 sont activées ou désactivées.

10. Appareil selon la revendication 8 ou 9, dans lequel
l'unité d'émission-réception est également configurée pour recevoir (402) un second message de demande concernant le premier dispositif terminal à partir du relais, dans lequel le second message de demande comprend une politique de sécurité de plan de commande PC5 du premier dispositif terminal et une politique de sécurité de plan de commande PC5 du relais ;
l'unité de traitement est également configurée pour déterminer (405) un algorithme de sécurité de plan de commande de la deuxième liaison PC5 selon une politique de sécurité de plan de commande PC5 du second dispositif terminal, la politique de sécurité de plan de commande PC5 du premier dispositif terminal, et la politique de sécurité de plan de commande PC5 du relais ; et
l'unité d'émission-réception est également configurée pour envoyer (406) l'algorithme de sécurité de plan de commande de la deuxième liaison PC5 au relais, dans lequel l'algorithme de sécurité de plan de commande indique un procédé de protection de sécurité de plan de commande de la deuxième liaison PC5 et un procédé de protection de sécurité de plan de commande de la première liaison PC5, et le procédé de protection de sécurité de plan de commande de la première liaison PC5 est le même que le procédé de protection de sécurité de plan de commande activé sur la deuxième liaison PC5.

11. Appareil selon la revendication 10, dans lequel le second message de demande comprend également une indication d'une politique de point d'extrémité de sécurité, et l'indication de la politique de point d'extrémité de sécurité indique qu'un point d'extrémité de sécurité est situé sur le relais.

12. Appareil selon la revendication 10, dans lequel, en ce que l'algorithme de sécurité de plan de commande indique un procédé de protection de sécurité de plan de commande de la deuxième liaison PC5 et un procédé de protection de sécurité de plan de commande de la première liaison PC5 comprend :
l'algorithme de sécurité de plan de commande indique qu'à la fois une protection d'intégrité de plan de commande de la première liaison PC5 et une protection d'intégrité de plan de commande de la deuxième liaison PC5 sont activées ou désactivées, et/ou à la fois une protection de confidentialité de plan de commande de la première liaison PC5 et une protection de confidentialité de plan de commande de la deuxième liaison PC5 sont activées ou désactivées.

13. Appareil selon l'une quelconque des revendications 10 à 12, dans lequel
lors de la détermination des premières informations selon la politique de sécurité de plan utilisateur PC5 du second dispositif terminal, la politique de sécurité de plan utilisateur PC5 du premier dispositif terminal et la politique de sécurité de plan utilisateur PC5 du relais, l'unité de traitement est spécifiquement configurée pour :
déterminer les premières informations selon la politique de sécurité de plan utilisateur PC5 du second dispositif terminal, la politique de sécurité de plan utilisateur PC5 du premier dispositif terminal, la politique de sécurité de plan utilisateur PC5 du relais et l'algorithme de sécurité de plan de commande de la deuxième liaison PC5, dans lequel un niveau de sécurité du procédé de protection de sécurité de plan utilisateur de la deuxième liaison PC5 n'est pas supérieur à un niveau de sécurité du procédé de protection de sécurité de plan de commande de la deuxième liaison PC5, et un niveau de sécurité du procédé de protection de sécurité de plan utilisateur de la première liaison PC5 n'est pas supérieur à un niveau de sécurité du procédé de protection de sécurité de plan de commande de la première liaison PC5.

14. Appareil selon la revendication 13, dans lequel, en ce que le procédé de protection de sécurité de plan utilisateur de la deuxième liaison PC5 n'est pas supérieur au procédé de protection de sécurité de plan de commande de la deuxième liaison PC5, et un niveau de sécurité du procédé de protection de sécurité de plan utilisateur de la première liaison PC5 n'est pas supérieur au procédé de protection de sécurité de plan de commande de la première liaison PC5 comprend :
lorsqu'une protection de confidentialité de plan de commande d'une troisième liaison PC5 est activée, une protection de confidentialité de plan utilisateur de la troisième liaison PC5 est activée ou désactivée ;
lorsque la protection de confidentialité de plan de commande de la troisième liaison PC5 est désactivée, la protection de confidentialité de plan utilisateur de la troisième liaison PC5 est désactivée ;
lorsqu'une protection d'intégrité de plan de commande de la troisième liaison PC5 est activée, une protection d'intégrité de plan utilisateur de la troisième liaison PC5 est activée ou désactivée ; et
lorsque la protection d'intégrité de plan de commande de la troisième liaison PC5 est désactivée, la protection d'intégrité de plan utilisateur de la troisième liaison PC5 est désactivée, dans lequel
la troisième liaison PC5 est la deuxième liaison PC5 ou la première liaison PC5.

15. Support de stockage lisible par ordinateur, dans lequel le support de stockage stocke un programme informatique ou des instructions, et lorsque le programme informatique ou les instructions sont exécutés par un appareil de communication, le procédé selon l'une quelconque des revendications 1 à 7 est mis en oeuvre.
